# EUROPEAN PATENT APPLICATION

(11) **EP 4 531 319 A1**
(43) Date of publication of application: **02.04.2025**
(21) Application number: 22943033.5
(22) Date of filing: 23.05.2022
(51) Int. Cl.: H04L 5/00, H04W 74/08

(54) **MULTI-PRACH TRANSMISSION CONFIGURATION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/094571
(87) International publication number: WO 2023/225827

(57) **Abstract**

The present invention relates to the technical field of communications, and provides a multi-PRACH transmission configuration method and apparatus, a device, and a storage medium. The method comprises sending a multi-PRACH transmission configuration to a terminal device, the multi-PRACH transmission configuration comprising a first multi-PRACH transmission configuration and/or a second multi-PRACH transmission configuration, wherein the first multi-PRACH transmission configuration is used for multi-PRACH transmission configuration based on contention free random access (CFRA), and the second multi-PRACH transmission configuration is used for multi-PRACH transmission configuration based on contention-based random access (CBRA); and receiving a CFRA multi-PRACH transmission initiated by the terminal device according to the first multi-PRACH transmission configuration and/or a CBRA multi-PRACH transmission initiated according to the second multi-PRACH transmission configuration. The present invention provides a processing method for a case of "multi-PRACH transmission configuration", such that a network side device receives a CFRA multi-PRACH transmission and/or a CBRA multi-PRACH transmission initiated by a terminal device according to a multi-PRACH transmission configuration, thereby improving the coverage of PRACHs.

## Description

### TECHNICAL FIELD

The disclosure relates to the field of communication technologies, in particular to a multi-physical random access channel (PRACH) transmission configuration method, a multi-PRACH transmission configuration apparatus, a device and a storage medium.

### BACKGROUND

In a communication system, poor uplink coverage may affect quality of communication between a terminal and a network device. A physical random access channel (PRACH) is a factor affecting the uplink coverage. The terminal can only send one first message (Msg1) transmission in one random access attempt, resulting in poor coverage of PRACH. Therefore, a "multi-PRACH transmission configuration" method is required, so that the network device can receive contention-free random access (CFRA) multi-PRACH transmission and/or contention-based random access (CBRA) multi-PRACH transmission initiated by the terminal according to a multi-PRACH transmission configuration, thereby improving the coverage of PRACH.

### SUMMARY

The disclosure provides a multi-physical random access channel (PRACH) transmission configuration method, a multi-PRACH transmission configuration apparatus, a device and a storage medium, to enable the network device to receive contention-free random access (CFRA) multi-PRACH transmission and/or contention-based random access (CBRA) multi-PRACH transmission initiated by the terminal according to a multi-PRACH transmission configuration, thereby improving the coverage of PRACH.

According to a first aspect of embodiments of the disclosure, a multi-PRACH transmission configuration method is provided. The method is performed by a network device, and includes:
sending a multi-PRACH transmission configuration to a terminal, in which the multi-PRACH transmission configuration includes a first multi-PRACH transmission configuration and/or a second multi-PRACH transmission configuration, the first multi-PRACH transmission configuration is used for CFRA multi-PRACH transmission configuration, and the second multi-PRACH transmission configuration is used for CBRA multi-PRACH transmission configuration; and
receiving CFRA multi-PRACH transmission initiated by the terminal according to the first multi-PRACH transmission configuration and/or CBRA multi-PRACH transmission initiated by the terminal according to the second multi-PRACH transmission configuration.

Optionally, in an embodiment of the disclosure, a trigger mode of CFRA includes at least one of:
a physical downlink control channel (PDCCH) trigger;
a switching trigger;
a beam failure recovery trigger; or
a primary secondary cell (PScell) addition or change trigger.

Optionally, in an embodiment of the disclosure, sending the multi-PRACH transmission configuration to the terminal, includes:
in response to CFRA triggered by PDCCH, sending a PDCCH order to the terminal, in which the PDCCH order carries the first multi-PRACH transmission configuration.

Optionally, in an embodiment of the disclosure, sending the multi-PRACH transmission configuration to the terminal, includes:
in response to CFRA triggered by PScell addition or change, sending a dedicated random access channel (RACH) configuration (RACH-ConfigDedicated) to the terminal, in which a CFRA configuration of the RACH-ConfigDedicated carries the first multi-PRACH transmission configuration.

Optionally, in an embodiment of the disclosure, sending the multi-PRACH transmission configuration to the terminal, includes:
in response to CFRA triggered by switching, sending a RACH-ConfigDedicated to the terminal, in which a CFRA configuration of the RACH-ConfigDedicated carries the first multi-PRACH transmission configuration.

Optionally, in an embodiment of the disclosure, sending the multi-PRACH transmission configuration to the terminal, includes:
in response to CFRA triggered by beam failure recovery, sending a beam failure recovery configuration to the terminal, in which the beam failure recovery configuration carries the first multi-PRACH transmission configuration.

Optionally, in an embodiment of the disclosure, the beam failure recovery configuration includes at least one of:
a beam failure recovery configuration (BeamFailureRecoveryConfig);
a beam failure recovery secondary cell (SCell) configuration (BeamFailureRecoverySCellConfig); or
a beam failure recovery serving cell configuration (BeamFailureRecoveryServingCellConfig).

Optionally, in an embodiment of the disclosure, sending the multi-PRACH transmission configuration to the terminal, includes:
sending the second multi-PRACH transmission configuration to the terminal via a broadcast signaling or a dedicated signaling.

Optionally, in an embodiment of the disclosure, the broadcast signaling includes a system information block 1 (SIB1).

Optionally, in an embodiment of the disclosure, the dedicated signaling includes at least one of:
a radio resource control (RRC) reconfiguration (RRCReconfiguration) message;
an RRC resume (RRCResume) message;
an RRC release (RRCRelease) message; or
an RRC setup (RRCSetup) message.

Optionally, in an embodiment of the disclosure, sending the second multi-PRACH transmission configuration to the terminal, includes:
sending a common RACH configuration to the terminal, in which the RACH configuration carries the second multi-PRACH transmission configuration.

Optionally, in an embodiment of the disclosure, the RACH configuration includes common RACH resources configured separately on each bandwidth part (BWP).

Optionally, in an embodiment of the disclosure, sending the RACH configuration to the terminal, includes:
sending a first RACH common configuration (RACH-ConfigCommon) in an initial BWP configuration of a SIB1 to the terminal, in which the first RACH-ConfigCommon carries the RACH configuration.

Optionally, in an embodiment of the disclosure, sending the RACH configuration to the terminal, includes:
sending a second RACH-ConfigCommon in a BWP configuration of an RRCReconfiguration message to the terminal, in which the second RACH-ConfigCommon carries the RACH configuration.

Optionally, in an embodiment of the disclosure, sending the second multi-PRACH transmission configuration to the terminal, includes:
sending a dedicated RACH configuration to the terminal, in which the dedicated RACH configuration carries the second multi-PRACH transmission configuration.

Optionally, in an embodiment of the disclosure, sending the RACH configuration to the terminal, includes:
in response to CBRA triggered by beam failure recovery, sending a BeamFailureRecoveryConfig to the terminal, in which the BeamFailureRecoveryConfig carries the second multi-PRACH transmission configuration configured in the dedicated RACH configuration.

Optionally, in an embodiment of the disclosure, sending the second multi-PRACH transmission configuration to the terminal, includes:
in response to CBRA triggered by PScell addition or change, sending a RACH-ConfigDedicated to the terminal, in which the RACH-ConfigDedicated carries the second multi-PRACH transmission configuration configured in the dedicated RACH configuration.

Optionally, in an embodiment of the disclosure, sending the second multi-PRACH transmission configuration to the terminal, includes:
in response to CBRA triggered by switching, sending a RACH-ConfigDedicated to the terminal, in which a CBRA configuration of the RACH-ConfigDedicated carries the second multi-PRACH transmission configuration.

Optionally, in an embodiment of the disclosure, sending the second multi-PRACH transmission configuration to the terminal, includes:
sending a RACH configuration of a feature combination to the terminal, in which the RACH configuration of the feature combination carries the second multi-PRACH transmission configuration.

Optionally, in an embodiment of the disclosure, the feature combination includes a Coverage Enhancement feature, in which the Coverage Enhancement feature is used to indicate a Coverage Enhancement feature that supports the CBRA multi-PRACH transmission.

According to a second aspect of embodiments of the disclosure, a multi-PRACH transmission configuration method is provided. The method is performed by a terminal, and includes:
receiving a multi-PRACH transmission configuration sent by a network device, in which the multi-PRACH transmission configuration includes a first multi-PRACH transmission configuration and/or a second multi-PRACH transmission configuration, the first multi-PRACH transmission configuration is used for CFRA multi-PRACH transmission configuration, and the second multi-PRACH transmission configuration is used for CBRA multi-PRACH transmission configuration; and
sending CFRA multi-PRACH transmission initiated according to the first multi-PRACH transmission configuration and/or CBRA multi-PRACH transmission initiated according to the second multi-PRACH transmission configuration to the network device.

Optionally, in an embodiment of the disclosure, a trigger mode of CFRA includes at least one of:
a PDCCH trigger;
a switching trigger;
a beam failure recovery trigger; or
a PScell addition or change trigger.

Optionally, in an embodiment of the disclosure, receiving the multi-PRACH transmission configuration sent by the network device, includes:
in response to CFRA triggered by PDCCH, receiving a PDCCH order sent by the network device, in which the PDCCH order carries the first multi-PRACH transmission configuration.

Optionally, in an embodiment of the disclosure, receiving the multi-PRACH transmission configuration sent by the network device, includes:
in response to CFRA triggered by PScell addition or change, receiving a dedicated RACH configuration (RACH-ConfigDedicated) sent by the network device, in which a CFRA configuration of the RACH-ConfigDedicated carries the first multi-PRACH transmission configuration.

Optionally, in an embodiment of the disclosure, receiving the multi-PRACH transmission configuration sent by the network device, includes:
in response to CFRA triggered by switching, receiving a RACH-ConfigDedicated sent by the network device, in which a CFRA configuration of the RACH-ConfigDedicated carries the first multi-PRACH transmission configuration.

Optionally, in an embodiment of the disclosure, receiving the multi-PRACH transmission configuration sent by the network device, includes:
in response to CFRA triggered by beam failure recovery, receiving a beam failure recovery configuration sent by the network device, in which the beam failure recovery configuration carries the first multi-PRACH transmission configuration.

Optionally, in an embodiment of the disclosure, the beam failure recovery configuration includes at least one of:
a BeamFailureRecoveryConfig;
a BeamFailureRecoverySCellConfig; or
a BeamFailureRecoveryServingCellConfig.

Optionally, in an embodiment of the disclosure, receiving the multi-PRACH transmission configuration sent by the network device, includes:
receiving the second multi-PRACH transmission configuration sent by the network device via a broadcast signaling or a dedicated signaling.

Optionally, in an embodiment of the disclosure, the broadcast signaling includes a SIB 1.

Optionally, in an embodiment of the disclosure, the dedicated signaling includes at least one of:
an RRCReconfiguration message;
an RRCResume message;
an RRCRelease message; or
an RRCSetup message.

Optionally, in an embodiment of the disclosure, receiving the second multi-PRACH transmission configuration sent by the network device, includes:
receiving a RACH configuration sent by the network device, in which the RACH configuration carries the second multi-PRACH transmission configuration.

Optionally, in an embodiment of the disclosure, the RACH configuration includes common RACH resources configured separately on each BWP.

Optionally, in an embodiment of the disclosure, receiving the second multi-PRACH transmission configuration sent by the network device, includes:
receiving a first RACH-ConfigCommon in an initial BWP configuration of a SIB1 sent by the network device, in which the first RACH-ConfigCommon carries the RACH configuration.

Optionally, in an embodiment of the disclosure, receiving the second multi-PRACH transmission configuration sent by the network device, includes:
receiving a second RACH-ConfigCommon in a BWP configuration of an RRCReconfiguration message sent by the network device, in which the second RACH-ConfigCommon carries the RACH configuration.

Optionally, in an embodiment of the disclosure, receiving the second multi-PRACH transmission configuration sent by the network device, includes:
receiving a dedicated RACH configuration sent by the network device, in which the dedicated RACH configuration carries the second multi-PRACH transmission configuration.

Optionally, in an embodiment of the disclosure, receiving the second multi-PRACH transmission configuration sent by the network device, includes:
in response to CBRA triggered by beam failure recovery, receiving a BeamFailureRecoveryConfig sent by the network device, in which the BeamFailureRecoveryConfig carries the second multi-PRACH transmission configuration configured in the dedicated RACH configuration.

Optionally, in an embodiment of the disclosure, receiving the second multi-PRACH transmission configuration sent by the network device, includes:
in response to CBRA triggered by PScell addition or change, receiving a RACH-ConfigDedicated sent by the network device, in which the RACH-ConfigDedicated carries the second multi-PRACH transmission configuration configured in the dedicated RACH configuration.

Optionally, in an embodiment of the disclosure, receiving the second multi-PRACH transmission configuration sent by the network device, includes:
in response to CBRA triggered by switching, receiving a RACH-ConfigDedicated sent by the network device, in which a CBRA configuration of the RACH-ConfigDedicated carries the second multi-PRACH transmission configuration.

Optionally, in an embodiment of the disclosure, receiving the second multi-PRACH transmission configuration sent by the network device, includes:
receiving a RACH configuration of a feature combination sent by the network device, in which the RACH configuration of the feature combination carries the second multi-PRACH transmission configuration.

Optionally, in an embodiment of the disclosure, the feature combination includes a Coverage Enhancement feature, in which the Coverage Enhancement feature is used to indicate a Coverage Enhancement feature that supports the CBRA multi-PRACH transmission.

According to a third aspect of embodiments of the disclosure, a multi-PRACH transmission configuration apparatus is provided. The apparatus includes:
a sending module, configured to send a multi-PRACH transmission configuration to a terminal, in which the multi-PRACH transmission configuration includes a first multi-PRACH transmission configuration and/or a second multi-PRACH transmission configuration, the first multi-PRACH transmission configuration is used for CFRA multi-PRACH transmission configuration, and the second multi-PRACH transmission configuration is used for CBRA multi-PRACH transmission configuration, and the first multi-PRACH transmission configuration is used for CFRA multi-PRACH transmission configuration and the second multi-PRACH transmission configuration is used for CBRA multi-PRACH transmission configuration; and
a receiving module, configured to receive CFRA multi-PRACH transmission initiated by the terminal according to the first multi-PRACH transmission configuration and/or CBRA multi-PRACH transmission initiated by the terminal according to the second multi-PRACH transmission configuration.

According to a fourth aspect of embodiments of the disclosure, a multi-PRACH transmission configuration apparatus is provided. The apparatus includes:
a receiving module, configured to receive a multi-PRACH transmission configuration sent by a network device, in which the multi-PRACH transmission configuration includes a first multi-PRACH transmission configuration and/or a second multi-PRACH transmission configuration, the first multi-PRACH transmission configuration is used for CFRA multi-PRACH transmission configuration, and the second multi-PRACH transmission configuration is used for CBRA multi-PRACH transmission configuration; and
a sending module, configured to send CFRA multi-PRACH transmission initiated according to the first multi-PRACH transmission configuration and/or CBRA multi-PRACH transmission initiated according to the second multi-PRACH transmission configuration to the network device.

According to a fifth aspect of embodiments of the disclosure, a terminal is provided. The device includes a processor and a memory having computer programs stored thereon. When the processor executes the computer programs stored in the memory, the device is caused to implement the method described in the first aspect above.

According to a sixth aspect of embodiments of the disclosure, a network device is provided. The device includes a processor and a memory having computer programs stored thereon. When the processor executes the computer programs stored in the memory, the device is caused to implement the method described in the second aspect above.

According to a seventh aspect of embodiments of the disclosure, a communication device is provided. The communication device includes: a processor and an interface circuit.

The interface circuit is configured to receive code instructions and transmit the code instructions to the processor.

The processor is configured to run the code instructions to cause the device to perform the method described in the first aspect above.

According to an eighth aspect of embodiments of the disclosure, a communication device is provided. The communication device includes: a processor and an interface circuit.

The interface circuit is configured to receive code instructions and transmit the code instructions to the processor.

The processor is configured to run the code instructions to cause the device to perform the method described in the second aspect above.

According to a ninth aspect of embodiments of the disclosure, a computer-readable storage medium is provided. The computer-readable storage medium is configured to store instructions. When the instructions are executed, the method described in the first aspect is implemented.

According to a tenth aspect of embodiments of the disclosure, a computer-readable storage medium is provided. The computer-readable storage medium is configured to store instructions. When the instructions are executed, the method described in the second aspect is implemented.

In conclusion, in the embodiments of the disclosure, the network device sends the multi-PRACH transmission configuration to the terminal. The multi-PRACH transmission configuration includes a first multi-PRACH transmission configuration and/or a second multi-PRACH transmission configuration. The first multi-PRACH transmission configuration is used for CFRA multi-PRACH transmission configuration, and the second multi-PRACH transmission configuration is used for CBRA multi-PRACH transmission configuration. The network device receives the CFRA multi-PRACH transmission initiated by the terminal according to the first multi-PRACH transmission configuration and/or the CBRA multi-PRACH transmission initiated by the terminal according to the second multi-PRACH transmission configuration. In the embodiments of the disclosure, after sending the multi-PRACH transmission configuration to the terminal, the terminal initiates the CFRA multi-PRACH transmission and/or the CBRA multi-PRACH transmission according to the multi-PRACH transmission configuration, thereby reducing the probability of random access failure. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

### BRIEF DESCRIPTION OF THE DRAWINGS

The foregoing and/or additional aspects and advantages of the disclosure will become apparent and readily understood from the following description of embodiments in combination with the accompanying drawings.
FIG. 1 is a flowchart of a multi-physical random access channel (PRACH) transmission configuration method provided by an embodiment of the disclosure.
FIG. 2 is a flowchart of a multi-PRACH transmission configuration method provided by an embodiment of the disclosure.
FIG. 3 is a flowchart of a multi-PRACH transmission configuration method provided by an embodiment of the disclosure.
FIG. 4 is a flowchart of a multi-PRACH transmission configuration method provided by an embodiment of the disclosure.
FIG. 5 is a flowchart of a multi-PRACH transmission configuration method provided by an embodiment of the disclosure.
FIG. 6 is a flowchart of a multi-PRACH transmission configuration method provided by an embodiment of the disclosure.
FIG. 7 is a flowchart of a multi-PRACH transmission configuration method provided by an embodiment of the disclosure.
FIG. 8 is a flowchart of a multi-PRACH transmission configuration method provided by an embodiment of the disclosure.
FIG. 9 is a flowchart of a multi-PRACH transmission configuration method provided by an embodiment of the disclosure.
FIG. 10 is a flowchart of a multi-PRACH transmission configuration method provided by an embodiment of the disclosure.
FIG. 11 is a flowchart of a multi-PRACH transmission configuration method provided by an embodiment of the disclosure.
FIG. 12 is a flowchart of a multi-PRACH transmission configuration method provided by an embodiment of the disclosure.
FIG. 13 is a flowchart of a multi-PRACH transmission configuration method provided by an embodiment of the disclosure.
FIG. 14 is a flowchart of a multi-PRACH transmission configuration method provided by an embodiment of the disclosure.
FIG. 15 is a flowchart of a multi-PRACH transmission configuration method provided by an embodiment of the disclosure.
FIG. 16 is a flowchart of a multi-PRACH transmission configuration method provided by an embodiment of the disclosure.
FIG. 17 is a structural diagram of a multi-PRACH transmission configuration apparatus provided by an embodiment of the disclosure.
FIG. 18 is a structural diagram of another multi-PRACH transmission configuration apparatus provided by an embodiment of the disclosure.
FIG. 19 is a block diagram of a network device provided by an embodiment of the disclosure.
FIG. 20 is a block diagram of a terminal provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining that".

The network elements or network functions involved in the embodiments of the disclosure may be implemented either by a separate hardware device or by software in the hardware device, which is not limited in the embodiments of the disclosure.

A multi-physical random access channel (PRACH) transmission configuration method, a multi-PRACH transmission configuration apparatus, a device, and a storage medium provided by embodiments of the disclosure are described in detail below with reference to the accompanying drawings.

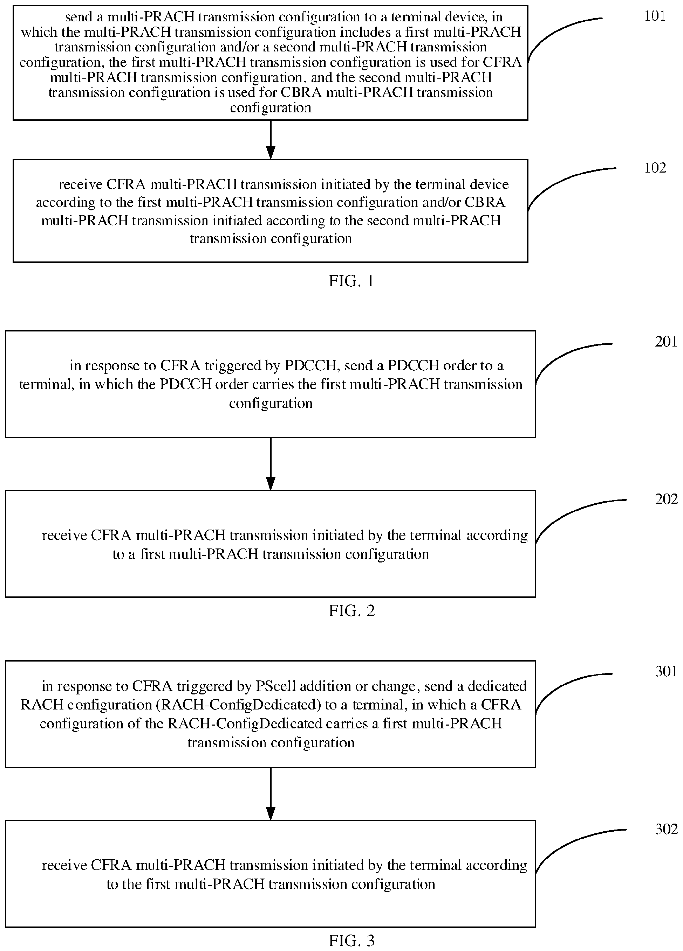

FIG. 1 is a flowchart of a multi-PRACH transmission configuration method provided by an embodiment of the disclosure. The method is performed by a network device. As illustrated in FIG. 1, the method includes the following steps.

At step 101, a multi-PRACH transmission configuration is sent to a terminal, in which the multi-PRACH transmission configuration includes a first multi-PRACH transmission configuration and/or a second multi-PRACH transmission configuration, the first multi-PRACH transmission configuration is used for contention-free random access (CFRA) multi-PRACH transmission configuration, and the second multi-PRACH transmission configuration is used for contention-based random access (CBRA) multi-PRACH transmission configuration.

At step 102, CFRA multi-PRACH transmission initiated by the terminal according to the first multi-PRACH transmission configuration and/or CBRA multi-PRACH transmission initiated by the terminal according to the second multi-PRACH transmission configuration is received.

It is noted that, in an embodiment of the disclosure, the terminal may be a device that provides voice and/or data connectivity to a user. The terminal may communicate with one or more core networks via a Radio Access Network (RAN). The terminal may be an Internet of Things (IoT) terminal, such as a sensor device, a cell phone (or "cellular" phone), and a computer with the IoT terminal. The terminal may also be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, or a user agent. Alternatively, the terminal may be an unmanned aerial vehicle device. Alternatively, the terminal may be an in-vehicle device, for example, an electronic control unit having wireless communication function, or a wireless terminal external to the electronic control unit. Alternatively, the terminal can also be a roadside device, for example, a street light, a signal light, or other roadside devices having wireless communication function.

In an embodiment of the disclosure, when the terminal sends a preamble, it may, for example, perform a preamble time-domain repetition, or it may send a plurality of preambles consecutively in the time domain. One PRACH transmission refers to sending a plurality of preambles consecutively as a whole, and a multi-PRACH transmission refers to performing PRACH transmissions for multiple times.

In an embodiment of the disclosure, a trigger mode of CFRA includes at least one of:
a physical downlink control channel (PDCCH) trigger;
a switching trigger;
a beam failure recovery trigger; or
a primary secondary cell (PScell) addition or change trigger.

In an embodiment of the disclosure, sending the multi-PRACH transmission configuration to the terminal, includes:
in response to CFRA triggered by PDCCH, sending a PDCCH order to the terminal, in which the PDCCH order carries the first multi-PRACH transmission configuration.

In an embodiment of the disclosure, sending the multi-PRACH transmission configuration to the terminal, includes:
in response to CFRA triggered by PScell addition or change, sending a dedicated random access channel (RACH) configuration (RACH-ConfigDedicated) to the terminal, in which a CFRA configuration of the RACH-ConfigDedicated carries the first multi-PRACH transmission configuration.

In an embodiment of the disclosure, sending the multi-PRACH transmission configuration to the terminal, includes:
in response to CFRA triggered by switching, sending a RACH-ConfigDedicated to the terminal, in which a CFRA configuration of the RACH-ConfigDedicated carries the first multi-PRACH transmission configuration.

In an embodiment of the disclosure, sending the multi-PRACH transmission configuration to the terminal, includes:
in response to CFRA triggered by beam failure recovery, sending a beam failure recovery configuration to the terminal, in which the beam failure recovery configuration carries the first multi-PRACH transmission configuration.

In an embodiment of the disclosure, the beam failure recovery configuration includes at least one of:
a beam failure recovery configuration (BeamFailureRecoveryConfig);
a beam failure recovery secondary cell (SCell) configuration (BeamFailureRecoverySCellConfig); or
a beam failure recovery serving cell configuration (BeamFailureRecoveryServingCellConfig).

In an embodiment of the disclosure, sending the multi-PRACH transmission configuration to the terminal, includes:
sending the second multi-PRACH transmission configuration to the terminal via a broadcast signaling or a dedicated signaling.

In an embodiment of the disclosure, the broadcast signaling includes a system information block 1 (SIB1).

In an embodiment of the disclosure, the dedicated signaling includes at least one of:
a radio resource control (RRC) reconfiguration (RRCReconfiguration) message;
an RRC resume (RRCResume) message;
an RRC release (RRCRelease) message; or
an RRC setup (RRCSetup) message.

In an embodiment of the disclosure, sending the second multi-PRACH transmission configuration to the terminal includes:
sending a common RACH configuration to the terminal, in which the RACH configuration carries the second multi-PRACH transmission configuration.

In an embodiment of the disclosure, the RACH configuration includes common RACH resources configured separately on each bandwidth part (BWP).

In an embodiment of the disclosure, sending the RACH configuration to the terminal, includes:
sending a first RACH common configuration (RACH-ConfigCommon) in an initial BWP configuration of a SIB1 to the terminal, in which the first RACH-ConfigCommon carries the RACH configuration.

In an embodiment of the disclosure, sending the RACH configuration to the terminal, includes:
sending a second RACH-ConfigCommon in a BWP configuration of an RRCReconfiguration message to the terminal, in which the second RACH-ConfigCommon carries the RACH configuration.

In an embodiment of the disclosure, sending the second multi-PRACH transmission configuration to the terminal includes:
sending a dedicated RACH configuration to the terminal, in which the dedicated RACH configuration carries the second multi-PRACH transmission configuration.

In an embodiment of the disclosure, sending the dedicated RACH configuration to the terminal includes:
in response to CBRA triggered by beam failure recovery, sending a BeamFailureRecoveryConfig to the terminal, in which the BeamFailureRecoveryConfig carries the second multi-PRACH transmission configuration configured in the dedicated RACH configuration.

In an embodiment of the disclosure, sending the second multi-PRACH transmission configuration to the terminal includes:
in response to CBRA triggered by PScell addition or change, sending a RACH-ConfigDedicated to the terminal, in which the RACH-ConfigDedicated carries the second multi-PRACH transmission configuration configured in the dedicated RACH configuration.

In an embodiment of the disclosure, sending the second multi-PRACH transmission configuration to the terminal includes:
in response to CBRA triggered by switching, sending a RACH-ConfigDedicated to the terminal, in which a CBRA configuration of the RACH-ConfigDedicated carries the second multi-PRACH transmission configuration.

In an embodiment of the disclosure, sending the second multi-PRACH transmission configuration to the terminal includes:
sending a RACH configuration of a feature combination to the terminal, in which the RACH configuration of the feature combination carries the second multi-PRACH transmission configuration.

In an embodiment of the disclosure, the feature combination includes a Coverage Enhancement feature, in which the Coverage Enhancement feature is used to indicate a Coverage Enhancement feature that supports the CBRA multi-PRACH transmission.

In conclusion, in the embodiments of the disclosure, the network device sends the multi-PRACH transmission configuration to the terminal. The multi-PRACH transmission configuration includes a first multi-PRACH transmission configuration and/or a second multi-PRACH transmission configuration. The first multi-PRACH transmission configuration is used for CFRA multi-PRACH transmission configuration, and the second multi-PRACH transmission configuration is used for CBRA multi-PRACH transmission configuration. The network device receives the CFRA multi-PRACH transmission initiated by the terminal according to the first multi-PRACH transmission configuration and/or the CBRA multi-PRACH transmission initiated by the terminal according to the second multi-PRACH transmission configuration. In the embodiments of the disclosure, after sending the multi-PRACH transmission configuration to the terminal, the terminal initiates the CFRA multi-PRACH transmission and/or the CBRA multi-PRACH transmission according to the multi-PRACH transmission configuration, thereby reducing the probability of random access failure. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

FIG. 2 is a flowchart of a multi-PRACH transmission configuration method provided by an embodiment of the disclosure. The method is performed by a network device. As illustrated in FIG. 2, the method includes the following steps.

At step 201, in response to CFRA triggered by PDCCH, a PDCCH order is sent to a terminal, in which the PDCCH order carries the first multi-PRACH transmission configuration.

At step 202, CFRA multi-PRACH transmission initiated by the terminal according to a first multi-PRACH transmission configuration is received.

In an embodiment of the disclosure, a trigger mode of CFRA includes at least one of:
a PDCCH trigger;
a switching trigger;
a beam failure recovery trigger; or
a PScell addition or change trigger.

The first multi-PRACH transmission configuration is used to indicate CFRA multi-PRACH transmission configuration. This first multi-PRACH transmission configuration does not specifically refer to a certain fixed multi-PRACH transmission configuration. For example, the first multi-PRACH transmission configuration is changeable depends on different CFRA trigger modes.

For example, in an embodiment of the disclosure, in response to CFRA triggered by PDCCH, the network device may send a PDCCH order to the terminal. Since the PDCCH order carries the first multi-PRACH transmission configuration, i.e., the PDCCH order carries a CFRA multi-PRACH transmission configuration, the terminal may initiate CFRA multi-PRACH transmission according to the first multi-PRACH transmission configuration, and the network device may receive the CFRA multi-PRACH transmission initiated by the terminal according to the first multi-PRACH transmission configuration.

In conclusion, in the embodiments of the disclosure, in response to CFRA triggered by PDCCH, the network device sends a PDCCH order to the terminal, in which the PDCCH order carries a first multi-PRACH transmission configuration. The network device receives CFRA multi-PRACH transmission initiated by the terminal according to the first multi-PRACH transmission configuration. In the embodiments of the disclosure, it is specifically disclosed that in response to the CFRA triggered by the PDCCH, the network device sends the PDCCH order to the terminal in order to send the first multi-PRACH transmission configuration to the terminal, which improves the accuracy of sending the first multi-PRACH transmission configuration. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

FIG. 3 is a flowchart of a multi-PRACH transmission configuration method provided by an embodiment of the disclosure. The method is performed by a network device. As illustrated in FIG. 3, the method includes the following steps.

At step S301, in response to CFRA triggered by PScell addition or change, a dedicated RACH configuration (RACH-ConfigDedicated) is sent to a terminal, in which a CFRA configuration of the RACH-ConfigDedicated carries a first multi-PRACH transmission configuration.

At step S302, CFRA multi-PRACH transmission initiated by the terminal according to the first multi-PRACH transmission configuration is received.

In an embodiment of the disclosure, a trigger mode of CFRA includes at least one of:
a PDCCH trigger;
a switching trigger;
a beam failure recovery trigger; or
a PScell addition or change trigger.

For example, in an embodiment of the disclosure, if CFRA is triggered by PScell addition or change, the network device may send a RACH-ConfigDedicated to the terminal in response to the CFRA triggered by PScell addition or change. Since the RACH-ConfigDedicated carries a first multi-PRACH transmission configuration, i.e., the RACH-ConfigDedicated carries a CFRA multi-PRACH transmission configuration, the terminal may initiate CFRA multi-PRACH transmission according to the first multi-PRACH transmission configuration, and the network device may receive the CFRA multi-PRACH transmission initiated by the terminal according to the first multi-PRACH transmission configuration.

In conclusion, in the embodiments of the disclosure, in response to CFRA triggered by PScell addition or change, the network device sends a RACH-ConfigDedicated to the terminal, in which a CFRA configuration of the RACH-ConfigDedicated carries a first multi-PRACH transmission configuration. The network device receives CFRA multi-PRACH transmission initiated by the terminal according to the first multi-PRACH transmission configuration. In the embodiments of the disclosure, it is specifically disclosed that in response to the CFRA triggered by the PScell addition or change, the network device sends the RACH-ConfigDedicated corresponding to this trigger mode to the terminal, in order to send the first multi-PRACH transmission configuration to the terminal, which improves the accuracy of sending the first multi-PRACH transmission configuration. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

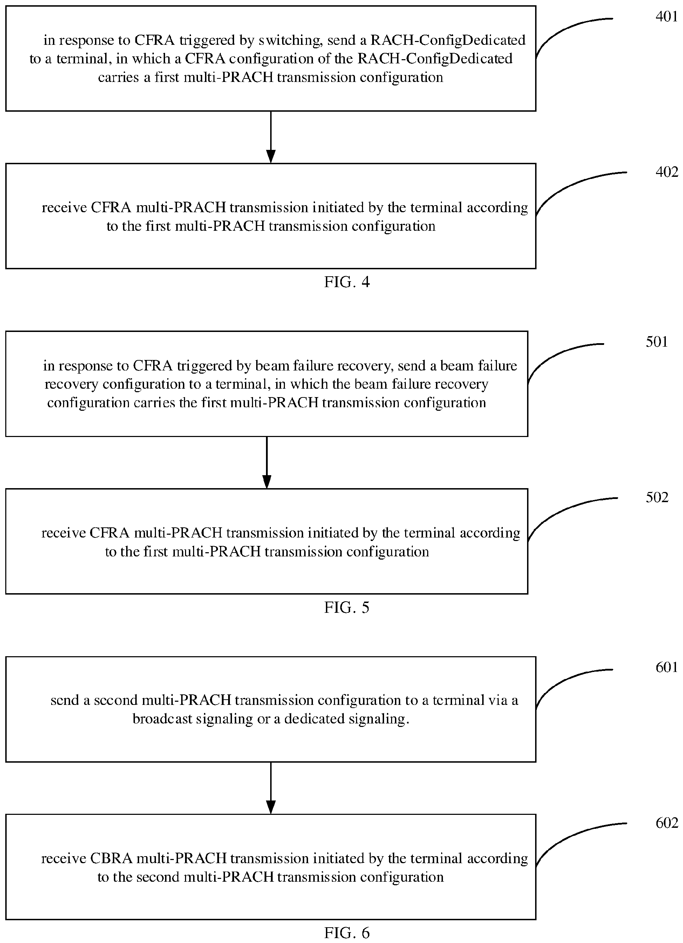

FIG. 4 is a flowchart of a multi-PRACH transmission configuration method provided by an embodiment of the disclosure. The method is performed by a network device. As illustrated in FIG. 4, the method includes the following steps.

At step 401, in response to CFRA triggered by switching, a RACH-ConfigDedicated is sent to a terminal, in which a CFRA configuration of the RACH-ConfigDedicated carries a first multi-PRACH transmission configuration.

At step 402, CFRA multi-PRACH transmission initiated by the terminal according to the first multi-PRACH transmission configuration is received.

In an embodiment of the disclosure, a trigger mode of CFRA includes at least one of:
a PDCCH trigger;
a switching trigger;
a beam failure recovery trigger; or
a PScell addition or change trigger.

For example, in an embodiment of the disclosure, if CFRA is triggered by switching, the network device sends a RACH-ConfigDedicated to the terminal in response to the switching-triggered CFRA. Since the RACH-ConfigDedicated carries a first multi-PRACH transmission configuration, i.e., the RACH-ConfigDedicated carries a CFRA multi-PRACH transmission configuration, the terminal may initiate CFRA multi-PRACH transmission according to the first multi-PRACH transmission configuration, and the network device receives the CFRA multi-PRACH transmission initiated by the terminal according to the first multi-PRACH transmission configuration.

In conclusion, in the embodiments of the disclosure, in response to CFRA triggered by switching, the network device sends a RACH-ConfigDedicated to the terminal, in which a CFRA configuration of the RACH-ConfigDedicated carries a first multi-PRACH transmission configuration. The network device receives CFRA multi-PRACH transmission initiated by the terminal according to the first multi-PRACH transmission configuration. In the embodiments of the disclosure, it is specifically disclosed that in response to the CFRA triggered by the switching, the network device sends the RACH-ConfigDedicated corresponding to this trigger mode to the terminal, in order to send the first multi-PRACH transmission configuration to the terminal, which improves the accuracy of sending the first multi-PRACH transmission configuration. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

FIG. 5 is a flowchart of a multi-PRACH transmission configuration method provided by an embodiment of the disclosure. The method is performed by a network device. As illustrated in FIG. 5, the method includes the following steps.

At step 501, in response to CFRA triggered by beam failure recovery, a beam failure recovery configuration is sent to a terminal, in which the beam failure recovery configuration carries the first multi-PRACH transmission configuration.

At step 502, CFRA multi-PRACH transmission initiated by the terminal according to the first multi-PRACH transmission configuration is received.

In an embodiment of the disclosure, a trigger mode of CFRA includes at least one of:
a PDCCH trigger;
a switching trigger;
a beam failure recovery trigger; or
a PScell addition or change trigger.

In an embodiment of the disclosure, the beam failure recovery configuration includes at least one of:
a BeamFailureRecoveryConfig;
a BeamFailureRecoverySCellConfig; or
a BeamFailureRecoveryServingCellConfig.

For example, in an embodiment of the disclosure, if CFRA is triggered by beam failure recovery, the network device sends a beam failure recovery configuration to the terminal in response to CFRA triggered by beam failure recovery. Since the beam failure recovery configuration carries a first multi-PRACH transmission configuration, i.e., the beam failure recovery configuration carries a CFRA multi-PRACH transmission configuration, the terminal may initiate CFRA multi-PRACH transmission according to the first multi-PRACH transmission configuration, and the network device receives the CFRA multi-PRACH transmission initiated by the terminal according to the first multi-PRACH transmission configuration.

In conclusion, in the embodiments of the disclosure, in response to CFRA triggered by beam failure recovery, the network device sends a beam failure recovery configuration to the terminal, in which the beam failure recovery configuration carries a first multi-PRACH transmission configuration. The network device receives CFRA multi-PRACH transmission initiated by the terminal according to the first multi-PRACH transmission configuration. In the embodiments of the disclosure, it is specifically disclosed that in response to the CFRA triggered by the beam failure recovery, the network device sends the beam failure recovery configuration corresponding to this trigger mode to the terminal, in order to send the first multi-PRACH transmission configuration to the terminal, which improves the accuracy of sending the first multi-PRACH transmission configuration. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

FIG. 6 is a flowchart of a multi-PRACH transmission configuration method provided by an embodiment of the disclosure. The method is performed by a network device. As illustrated in FIG. 6, the method includes the following steps.

At step 601, a second multi-PRACH transmission configuration is sent to a terminal via a broadcast signaling or a dedicated signaling.

At step 602, CBRA multi-PRACH transmission initiated by the terminal according to the second multi-PRACH transmission configuration is received.

In an embodiment of the disclosure, the first multi-PRACH transmission configuration is used to indicate a CBRA multi-PRACH transmission configuration, and the second multi-PRACH transmission configuration does not specifically refer to a particular fixed multi-PRACH transmission configuration. For example, when the trigger mode of CFRA changes, the second multi-PRACH transmission configuration changes accordingly.

In an embodiment of the disclosure, the broadcast signaling includes a SIB1.

In an embodiment of the disclosure, the dedicated signaling includes at least one of:
an RRCReconfiguration message;
an RRCResume message;
an RRCRelease message; or
an RRCSetup message.

In conclusion, in embodiments of the disclosure, the network device sends the second multi-PRACH transmission configuration to the terminal via a broadcast signaling or via a dedicated signaling. The network device receives the CBRA multi-PRACH transmission initiated by the terminal according to the second multi-PRACH transmission configuration. In embodiments of the disclosure, it is specifically disclosed that the second multi-PRACH transmission configuration is sent to the terminal via the broadcast signaling or via the dedicated signaling, which can improve the accuracy of sending the second multi-PRACH transmission configuration. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

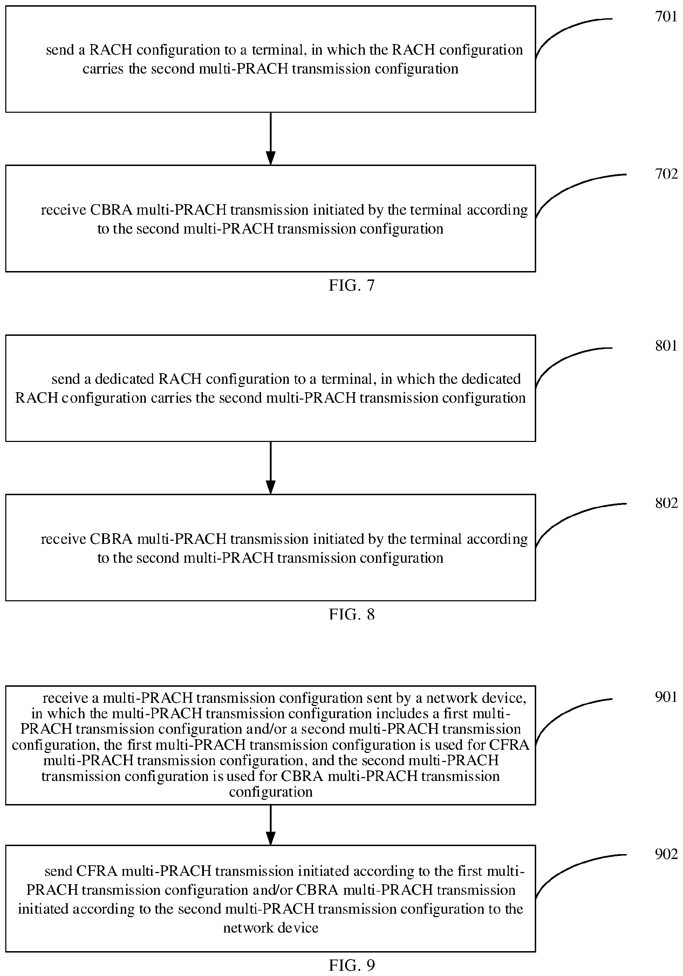

FIG. 7 is a flowchart of a multi-PRACH transmission configuration method provided by an embodiment of the disclosure. The method is performed by a network device. As illustrated in FIG. 7, the method includes the following steps.

At step 701, a common RACH configuration is sent to a terminal, in which the RACH configuration carries the second multi-PRACH transmission configuration.

At step 702, CBRA multi-PRACH transmission initiated by the terminal according to the second multi-PRACH transmission configuration is received.

In an embodiment of the disclosure, the RACH configuration includes common RACH resources configured separately on each BWP.

In an embodiment of the disclosure, when the network device sends the RACH configuration to the terminal, it can send the first RACH-ConfigCommon in the initial BWP configuration of the SIB1 to the terminal. The first RACH-ConfigCommon carries the RACH configuration.

For example, the "first" in the first RACH-ConfigCommon is only used to differentiate from the second RACH-ConfigCommon. The first RACH-ConfigCommon indicates the RACH-ConfigCommon in the initial BWP configuration of the SIB1.

In an embodiment of the disclosure, when the network device sends the RACH configuration to the terminal, it may send a second RACH-ConfigCommon in a BWP configuration of an RRCReconfiguration message to the terminal. The second RACH-ConfigCommon carries the RACH configuration.

For example, the "second" in the second RACH-ConfigCommon is only used to differentiate from the first RACH-ConfigCommon. The second RACH-ConfigCommon indicates the RACH-ConfigCommon in the BWP configuration of the RRCReconfiguration message.

In conclusion, in embodiments of the disclosure, the network device sends the RACH configuration to the terminal, in which the RACH configuration carries the second multi-PRACH transmission configuration. The network device receives the CBRA multi-PRACH transmission initiated by the terminal according to the second multi-PRACH transmission configuration. In embodiments of the disclosure, it is specifically disclosed that the network device sends the RACH configuration to the terminal, i.e., sends the second multi-PRACH transmission configuration to the terminal, which improves the accuracy of sending the second multi-PRACH transmission configuration. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

FIG. 8 is a flowchart of a multi-PRACH transmission configuration method provided by an embodiment of the disclosure. The method is performed by a network device. As illustrated in FIG. 8, the method includes the following steps.

At step 801, a dedicated RACH configuration is sent to a terminal, in which the dedicated RACH configuration carries the second multi-PRACH transmission configuration.

At step 802, CBRA multi-PRACH transmission initiated by the terminal according to the second multi-PRACH transmission configuration is received.

In an embodiment of the disclosure, sending the dedicated RACH configuration to the terminal, includes:
in response to CBRA triggered by beam failure recovery, sending a BeamFailureRecoveryConfig to the terminal, in which the BeamFailureRecoveryConfig carries the second multi-PRACH transmission configuration configured in the dedicated RACH configuration.

In an embodiment of the disclosure, when the network device sends the second multi-PRACH transmission configuration to the terminal, it may send a RACH-ConfigDedicated to the terminal in response to CBRA triggered by PScell addition or change. The RACH-ConfigDedicated carries the second multi-PRACH transmission configuration configured in the dedicated RACH configuration.

In an embodiment of the disclosure, when the network device sends the second multi-PRACH transmission configuration to the terminal, it may send a RACH-ConfigDedicated to the terminal in response to CBRA triggered by switching. A CBRA configuration of the RACH-ConfigDedicated carries the second multi-PRACH transmission configuration.

In an embodiment of the disclosure, when the network device sends the second multi-PRACH transmission configuration to the terminal, it sends a RACH configuration of a feature combination to the terminal, in which the RACH configuration of the feature combination carries the second multi-PRACH transmission configuration.

In an embodiment of the disclosure, the feature combination includes a Coverage Enhancement feature, in which the Coverage Enhancement feature is used to indicate a Coverage Enhancement feature that supports the CBRA multi-PRACH transmission.

For example, the feature combination may include at least one of:
coverage enhancement;
reduced capability (RedCap);
small data transmission (SDT); or
slice.

In conclusion, in embodiments of the disclosure, the network device sends the dedicated RACH configuration to the terminal, in which the dedicated RACH configuration carries the second multi-PRACH transmission configuration. It also receives the CBRA multi-PRACH transmission initiated by the terminal according to the second multi-PRACH transmission configuration. In embodiments of the disclosure, it is specifically disclosed that sending the dedicated RACH configuration to the terminal, in order to send the second multi-PRACH transmission configuration to the terminal, which improves the accuracy of sending the second multi-PRACH transmission configuration. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

FIG. 9 is a flowchart of a multi-PRACH transmission configuration method provided by an embodiment of the disclosure. The method is performed by a terminal. As illustrated in FIG. 9, the method includes the following steps.

At step 901, a multi-PRACH transmission configuration sent by a network device is received, in which the multi-PRACH transmission configuration includes a first multi-PRACH transmission configuration and/or a second multi-PRACH transmission configuration, the first multi-PRACH transmission configuration is used for CFRA multi-PRACH transmission configuration, and the second multi-PRACH transmission configuration is used for CBRA multi-PRACH transmission configuration.

At step 902, CFRA multi-PRACH transmission initiated according to the first multi-PRACH transmission configuration and/or CBRA multi-PRACH transmission initiated according to the second multi-PRACH transmission configuration is sent to the network device.

In an embodiment of the disclosure, a trigger mode of CFRA includes at least one of:
a PDCCH trigger;
a switching trigger;
a beam failure recovery trigger; or
a PScell addition or change trigger.

In an embodiment of the disclosure, receiving the multi-PRACH transmission configuration sent by the network device includes:
in response to CFRA triggered by PDCCH, receiving a PDCCH order sent by the network device, in which the PDCCH order carries the first multi-PRACH transmission configuration.

In an embodiment of the disclosure, receiving the multi-PRACH transmission configuration sent by the network device includes:
in response to CFRA triggered by PScell addition or change, receiving a RACH-ConfigDedicated sent by the network device, in which a CFRA configuration of the RACH-ConfigDedicated carries the first multi-PRACH transmission configuration.

In an embodiment of the disclosure, receiving the multi-PRACH transmission configuration sent by the network device includes:
in response to CFRA triggered by switching, receiving a RACH-ConfigDedicated sent by the network device, in which a CFRA configuration of the RACH-ConfigDedicated carries the first multi-PRACH transmission configuration.

In an embodiment of the disclosure, receiving the multi-PRACH transmission configuration sent by the network device, includes:
in response to CFRA triggered by beam failure recovery, receiving a beam failure recovery configuration sent by the network device, in which the beam failure recovery configuration carries the first multi-PRACH transmission configuration.

In an embodiment of the disclosure, the beam failure recovery configuration includes at least one of:
a BeamFailureRecoveryConfig;
a BeamFailureRecoverySCellConfig; or
a BeamFailureRecoveryServingCellConfig.

In an embodiment of the disclosure, receiving the multi-PRACH transmission configuration sent by the network device, includes:
receiving the second multi-PRACH transmission configuration sent by the network device via a broadcast signaling or a dedicated signaling.

In an embodiment of the disclosure, the broadcast signaling includes a SIB1.

In an embodiment of the disclosure, the dedicated signaling includes at least one of:
an RRCReconfiguration message;
an RRCResume message;
an RRCRelease message; or
an RRCSetup message.

In an embodiment of the disclosure, receiving the second multi-PRACH transmission configuration sent by the network device, includes:
receiving a RACH configuration sent by the network device, in which the RACH configuration carries the second multi-PRACH transmission configuration.

In an embodiment of the disclosure, the RACH configuration includes common RACH resources configured separately on each BWP.

In an embodiment of the disclosure, receiving the second multi-PRACH transmission configuration sent by the network device, includes:
receiving a first RACH-ConfigCommon in an initial BWP configuration of a SIB1 sent by the network device, in which the first RACH-ConfigCommon carries the RACH configuration.

In an embodiment of the disclosure, receiving the second multi-PRACH transmission configuration sent by the network device, includes:
receiving a second RACH-ConfigCommon in a BWP configuration of an RRCReconfiguration message sent by the network device, in which the second RACH-ConfigCommon carries the RACH configuration.

In an embodiment of the disclosure, receiving the second multi-PRACH transmission configuration sent by the network device, includes:
receiving a dedicated RACH configuration sent by the network device, in which the dedicated RACH configuration carries the second multi-PRACH transmission configuration.

In an embodiment of the disclosure, receiving the second multi-PRACH transmission configuration sent by the network device, includes:
in response to CBRA triggered by beam failure recovery, receiving a BeamFailureRecoveryConfig sent by the network device, in which the BeamFailureRecoveryConfig carries the second multi-PRACH transmission configuration configured in the dedicated RACH configuration.

In an embodiment of the disclosure, receiving the second multi-PRACH transmission configuration sent by the network device, includes:
in response to CBRA triggered by PScell addition or change, receiving a RACH-ConfigDedicated sent by the network device, in which the RACH-ConfigDedicated carries the second multi-PRACH transmission configuration configured in the dedicated RACH configuration.

In an embodiment of the disclosure, receiving the second multi-PRACH transmission configuration sent by the network device, includes:
in response to CBRA triggered by switching, receiving a RACH-ConfigDedicated sent by the network device, in which a CBRA configuration of the RACH-ConfigDedicated carries the second multi-PRACH transmission configuration.

In an embodiment of the disclosure, receiving the second multi-PRACH transmission configuration sent by the network device, includes:
receiving a RACH configuration of a feature combination sent by the network device, in which the RACH configuration of the feature combination carries the second multi-PRACH transmission configuration.

In an embodiment of the disclosure, the feature combination includes a Coverage Enhancement feature, in which the Coverage Enhancement feature is used to indicate a Coverage Enhancement feature that supports the CBRA multi-PRACH transmission.

In conclusion, in embodiments of the disclosure, the terminal receives the multi-PRACH transmission configuration sent by the network device. The multi-PRACH transmission configuration includes a first multi-PRACH transmission configuration and/or a second multi-PRACH transmission configuration. The first multi-PRACH transmission configuration is used for CFRA multi-PRACH transmission configuration, and the second multi-PRACH transmission configuration is used for CBRA multi-PRACH transmission configuration. The terminal sends the CFRA multi-PRACH transmission initiated according to the first multi-PRACH transmission configuration and/or the CBRA multi-PRACH transmission initiated according to the second multi-PRACH transmission configuration to the network device. In embodiments of the disclosure, the terminal may initiate the CFRA multi-PRACH transmission and/or the CBRA multi-PRACH transmission according to the received multi-PRACH transmission configuration, which can reduce the probability of random access failure. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

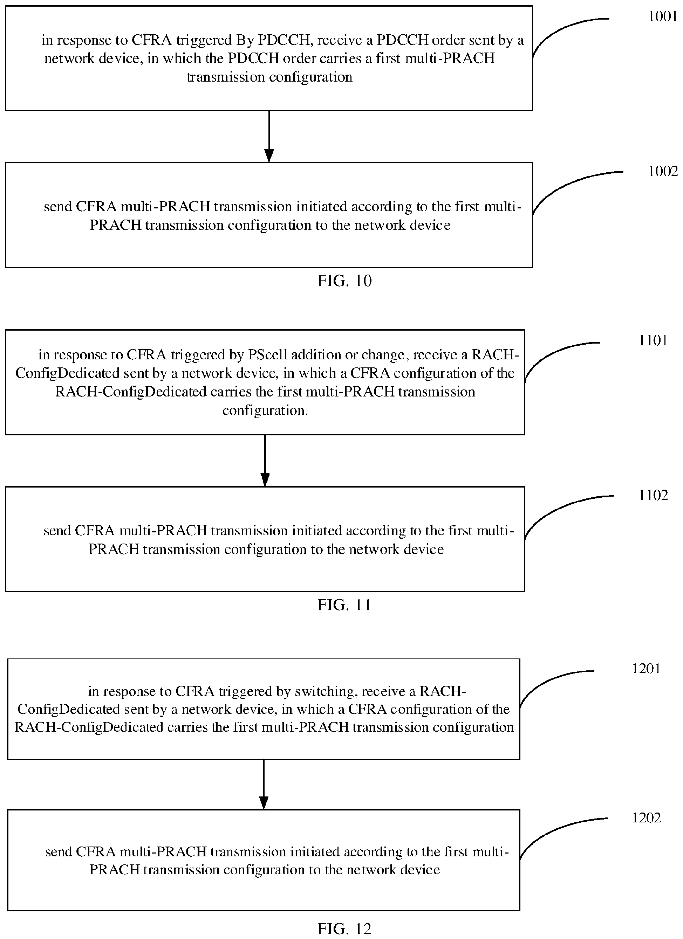

FIG. 10 is a flowchart of a multi-PRACH transmission configuration method provided by an embodiment of the disclosure. The method is performed by a terminal. As illustrated in FIG. 10, the method includes the following steps.

At step 1001, in response to CFRA triggered by PDCCH, a PDCCH order sent by a network device is received, in which the PDCCH order carries a first multi-PRACH transmission configuration.

At step 1002, CFRA multi-PRACH transmission initiated according to the first multi-PRACH transmission configuration is sent to the network device.

Other detailed descriptions of steps 1001 to 1002 can be found in the above description of the embodiments, which will not be repeated herein.

In conclusion, in embodiments of the disclosure, in response to CFRA triggered by PDCCH, the terminal receives the PDCCH order sent by the network device, in which the PDCCH order carries the first multi-PRACH transmission configuration. The terminal also sends CFRA multi-PRACH transmission initiated according to the first multi-PRACH transmission configuration to the network device. In embodiments of the disclosure, it is specifically disclosed that in response to the CFRA triggered by PDCCH, CFRA multi-PRACH transmission initiated according to the first multi-PRACH transmission configuration carried by the PDCCH order is sent to the network device, which improves the accuracy of sending the CFRA multi-PRACH transmission. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

FIG. 11 is a flowchart of a multi-PRACH transmission configuration method provided by an embodiment of the disclosure. The method is performed by a terminal. As illustrated in FIG. 11, the method includes the following steps.

At step 1101, in response to CFRA triggered by PScell addition or change, a RACH-ConfigDedicated sent by a network device is received, in which a CFRA configuration of the RACH-ConfigDedicated carries the first multi-PRACH transmission configuration.

At step 1102, CFRA multi-PRACH transmission initiated according to the first multi-PRACH transmission configuration is sent to the network device.

Other detailed descriptions of steps 1101 to 1102 can be found in the above description of the embodiments, which will not be repeated herein.

In conclusion, in embodiments of the disclosure, in response to CFRA triggered by PScell addition or change, the terminal receives RACH-ConfigDedicated sent by the network device, in which a CFRA configuration of the RACH-ConfigDedicated carries the first multi-PRACH transmission configuration. The terminal also sends CFRA multi-PRACH transmission initiated according to the first multi-PRACH transmission configuration to the network device. In embodiments of the disclosure, it is specifically disclosed that in response to the CFRA triggered by the PScell addition or change, the CFRA multi-PRACH transmission, initiated according to the first multi-PRACH transmission configuration that is carried by the CFRA configuration of the RACH-ConfigDedicated, is sent to the network device, which improves the accuracy of sending the CFRA multi-PRACH transmission. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

FIG. 12 is a flowchart of a multi-PRACH transmission configuration method provided by an embodiment of the disclosure. The method is performed by a terminal. As illustrated in FIG. 12, the method includes the following steps.

At step 1201, in response to CFRA triggered by switching, a RACH-ConfigDedicated sent by a network device is received, in which a CFRA configuration of the RACH-ConfigDedicated carries the first multi-PRACH transmission configuration.

At step 1202, CFRA multi-PRACH transmission initiated according to the first multi-PRACH transmission configuration is sent to the network device.

Other detailed descriptions of steps 1201 to 1202 can be found in the above description of the embodiments, which will not be repeated herein.

In conclusion, in embodiments of the disclosure, in response to CFRA triggered by switching, the terminal receives RACH-ConfigDedicated sent by the network device, in which a CFRA configuration of the RACH-ConfigDedicated carries the first multi-PRACH transmission configuration. The terminal sends CFRA multi-PRACH transmission initiated according to the first multi-PRACH transmission configuration to the network device. In embodiments of the disclosure, it is specifically disclosed that in response to the CFRA triggered by the switching, the CFRA multi-PRACH transmission, initiated according to the first multi-PRACH transmission configuration that is carried by the CFRA configuration of the RACH-ConfigDedicated, is sent to the network device, which improves the accuracy of sending the CFRA multi-PRACH transmission. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

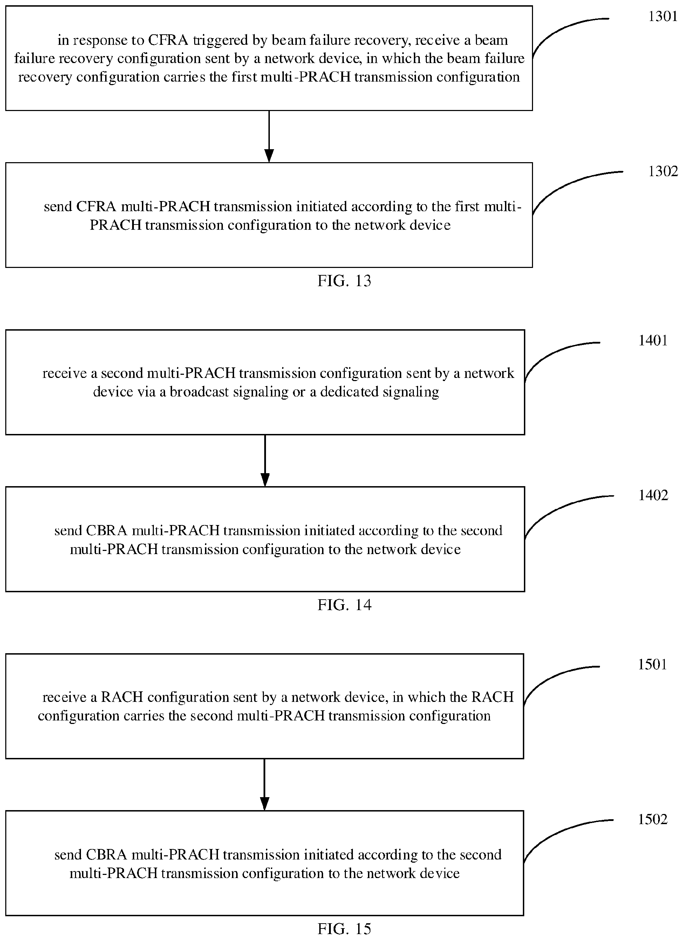

FIG. 13 is a flowchart of a multi-PRACH transmission configuration method provided by an embodiment of the disclosure. The method is performed by a terminal. As illustrated in FIG. 13, the method includes the following steps.

At step 1301, in response to CFRA triggered by beam failure recovery, a beam failure recovery configuration sent by a network device is received, in which the beam failure recovery configuration carries the first multi-PRACH transmission configuration.

At step 1302, CFRA multi-PRACH transmission initiated according to the first multi-PRACH transmission configuration is sent to the network device.

In an embodiment of the disclosure, the beam failure recovery configuration includes at least one of:
a BeamFailureRecoveryConfig;
a BeamFailureRecoverySCellConfig; or
a BeamFailureRecoveryServingCellConfig.

Other detailed descriptions of steps 1301 to 1302 can be found in the above description of the embodiments, which will not be repeated herein.

In conclusion, in embodiments of the disclosure, in response to CFRA triggered by beam failure recovery, the terminal receives a beam failure recovery configuration sent by the network device, in which the beam failure recovery configuration carries the first multi-PRACH transmission configuration. The terminal also sends CFRA multi-PRACH transmission initiated according to the first multi-PRACH transmission configuration to the network device. In embodiments of the disclosure, it is specifically disclosed that in response to the CFRA triggered by the beam failure recovery, the CFRA multi-PRACH transmission, initiated according to the first multi-PRACH transmission configuration carried by the beam failure recovery configuration, is sent to the network device, which improves the accuracy of sending the CFRA multi-PRACH transmission. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

FIG. 14 is a flowchart of a multi-PRACH transmission configuration method provided by an embodiment of the disclosure. The method is performed by a terminal. As illustrated in FIG. 14, the method includes the following steps.

At step 1401, a second multi-PRACH transmission configuration sent by a network device via a broadcast signaling or a dedicated signaling is received.

At step 1402, CBRA multi-PRACH transmission initiated according to the second multi-PRACH transmission configuration is sent to the network device.

In an embodiment of the disclosure, the broadcast signaling includes a SIB1.

In an embodiment of the disclosure, the dedicated signaling includes at least one of:
an RRCReconfiguration message;
an RRCResume message;
an RRCRelease message; or
an RRCSetup message.

Other detailed descriptions of steps 1401 to 1402 can be found in the above description of the embodiments, which will not be repeated herein.

In conclusion, in embodiments of the disclosure, the terminal receives the second multi-PRACH transmission configuration sent by the network device via the broadcast signaling or the dedicated signaling. The terminal sends the CBRA multi-PRACH transmission initiated according to the second multi-PRACH transmission configuration to the network device. In embodiments of the disclosure, it is specifically disclosed that the second multi-PRACH transmission configuration sent by the network device is received via a broadcast signaling or via a dedicated signaling, which can improve the accuracy of sending the second multi-PRACH transmission configuration, and improve the accuracy of the CBRA multi-PRACH transmission initiated according to the second multi-PRACH transmission configuration. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

FIG. 15 is a flowchart of a multi-PRACH transmission configuration method provided by an embodiment of the disclosure. The method is performed by a terminal. As illustrated in FIG. 15, the method includes the following steps.

At step 1501, a RACH configuration sent by a network device is received, in which the RACH configuration carries the second multi-PRACH transmission configuration.

At step 1502, CBRA multi-PRACH transmission initiated according to the second multi-PRACH transmission configuration is sent to the network device.

In an embodiment of the disclosure, the RACH configuration includes common RACH resources configured separately on each BWP.

In an embodiment of the disclosure, receiving the second multi-PRACH transmission configuration sent by the network device includes:
receiving a first RACH-ConfigCommon in an initial BWP configuration of a SIB1 sent by the network device, in which the first RACH-ConfigCommon carries the RACH configuration.

In an embodiment of the disclosure, receiving the second multi-PRACH transmission configuration sent by the network device includes:
receiving a second RACH-ConfigCommon in a BWP configuration of an RRCReconfiguration message sent by the network device, in which the second RACH-ConfigCommon carries the RACH configuration.

Other detailed descriptions of steps 1501 to 1502 can be found in the above description of the embodiments, which will not be repeated herein.

In conclusion, in embodiments of the disclosure, the terminal receives the RACH configuration sent by the network device, in which the RACH configuration carries a second multi-PRACH transmission configuration. The terminal sends CBRA multi-PRACH transmission initiated according to the second multi-PRACH transmission configuration to the network device. In embodiments of the disclosure, it is specifically disclosed that the RACH configuration is sent to the terminal, and the terminal sends the CBRA multi-PRACH transmission initiated according to the second multi-PRACH transmission configuration carried in the RACH configuration to the network device, which can improve the accuracy of sending the second multi-PRACH transmission configuration. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

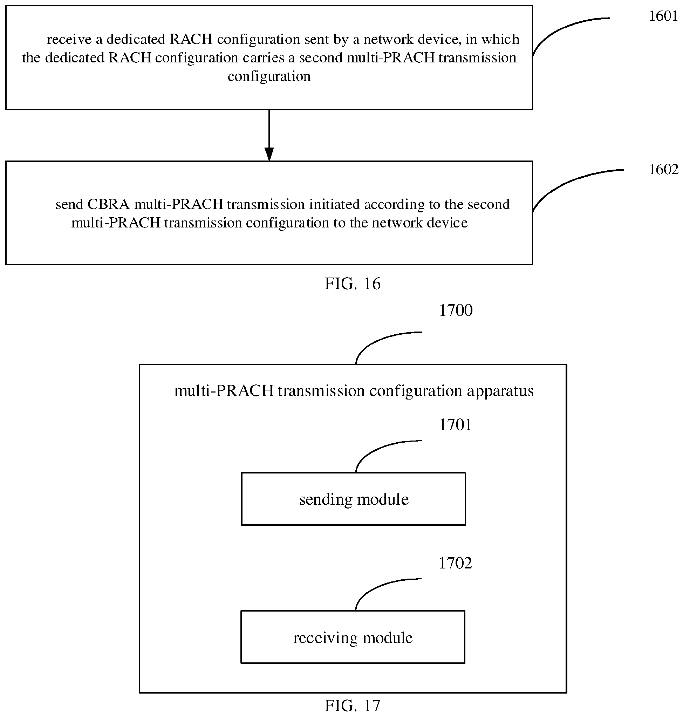

FIG. 16 is a flowchart of a multi-PRACH transmission configuration method provided by an embodiment of the disclosure. The method is performed by a terminal. As illustrated in FIG. 16, the method includes the following steps.

At step 1601, a dedicated RACH configuration sent by a network device is received, in which the dedicated RACH configuration carries a second multi-PRACH transmission configuration.

At step 1602, CBRA multi-PRACH transmission initiated according to the second multi-PRACH transmission configuration is sent to the network device.

In an embodiment of the disclosure, receiving the second multi-PRACH transmission configuration sent by the network device, includes:
in response to CBRA triggered by beam failure recovery, receiving a BeamFailureRecoveryConfig sent by the network device, in which the BeamFailureRecoveryConfig carries the second multi-PRACH transmission configuration configured in the dedicated RACH configuration.

In an embodiment of the disclosure, receiving the second multi-PRACH transmission configuration sent by the network device, includes:
in response to CBRA triggered by PScell addition or change, receiving a RACH-ConfigDedicated sent by the network device, in which the RACH-ConfigDedicated carries the second multi-PRACH transmission configuration configured in the dedicated RACH configuration.

In an embodiment of the disclosure, receiving the second multi-PRACH transmission configuration sent by the network device, includes:
in response to CBRA triggered by switching, receiving a RACH-ConfigDedicated sent by the network device, in which a CBRA configuration of the RACH-ConfigDedicated carries the second multi-PRACH transmission configuration.

In an embodiment of the disclosure, receiving the second multi-PRACH transmission configuration sent by the network device, includes:
receiving a RACH configuration of a feature combination sent by the network device, in which the RACH configuration of the feature combination carries the second multi-PRACH transmission configuration.

In an embodiment of the disclosure, the feature combination includes a Coverage Enhancement feature, in which the Coverage Enhancement feature is used to indicate a Coverage Enhancement feature that supports the CBRA multi-PRACH transmission.

Other detailed descriptions of steps 1601 to 1602 can be found in the above description of the embodiments, which will not be repeated herein.

In conclusion, in embodiments of the disclosure, the terminal receives the dedicated RACH configuration sent by the network device, in which the dedicated RACH configuration carries a second multi-PRACH transmission configuration. It also sends the CBRA multi-PRACH transmission initiated according to the second multi-PRACH transmission configuration to the network device. In embodiments of the disclosure, it is specifically disclosed that the terminal receives the dedicated RACH configuration sent by the network device, and sends the CBRA multi-PRACH transmission, initiated according to the second multi-PRACH transmission configuration carried in the dedicated RACH configuration, to the network device, which improves the accuracy of sending the second multi-PRACH transmission configuration. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

FIG. 17 is a structural diagram of a multi-PRACH transmission configuration apparatus provided by an embodiment of the disclosure. As illustrated in FIG. 17, the apparatus 1700 includes:
a sending module 1701, configured to send a multi-PRACH transmission configuration to a terminal, in which the multi-PRACH transmission configuration includes a first multi-PRACH transmission configuration and/or a second multi-PRACH transmission configuration, the first multi-PRACH transmission configuration is used for CFRA multi-PRACH transmission configuration, and the second multi-PRACH transmission configuration is used for CBRA multi-PRACH transmission configuration, and the first multi-PRACH transmission configuration is used for CFRA multi-PRACH transmission configuration and the second multi-PRACH transmission configuration is used for CBRA multi-PRACH transmission configuration; and
a receiving module 1702, configured to receive CFRA multi-PRACH transmission initiated by the terminal according to the first multi-PRACH transmission configuration and/or CBRA multi-PRACH transmission initiated by the terminal according to the second multi-PRACH transmission configuration.

In conclusion, with multi-PRACH transmission configuration apparatus provided in embodiments of the disclosure, the sending module sends a multi-PRACH transmission configuration to the terminal, and the receiving module receives CFRA multi-PRACH transmission initiated by the terminal according to a first multi-PRACH transmission configuration and/or CBRA multi-PRACH transmission initiated by the terminal according to a second multi-PRACH transmission configuration. In embodiments of the disclosure, after sending the multi-PRACH transmission configuration to the terminal, the terminal initiates the CFRA multi-PRACH transmission and/or the CBRA multi-PRACH transmission according to the multi-PRACH transmission configuration, thereby reducing the probability of random access failure. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

In an embodiment of the disclosure, a trigger mode of CFRA includes at least one of:
a PDCCH trigger;
a switching trigger;
a beam failure recovery trigger; or
a PScell addition or change trigger.

In an embodiment of the disclosure, when sending the multi-PRACH transmission configuration to the terminal, the sending module 1701 is configured to:
in response to CFRA triggered by PDCCH, send a PDCCH order to the terminal, in which the PDCCH order carries the first multi-PRACH transmission configuration.

In an embodiment of the disclosure, when sending the multi-PRACH transmission configuration to the terminal, the sending module 1701 is configured to:
in response to CFRA triggered by PScell addition or change, send a RACH-ConfigDedicated to the terminal, in which a CFRA configuration of the RACH-ConfigDedicated carries the first multi-PRACH transmission configuration.

In an embodiment of the disclosure, when sending the multi-PRACH transmission configuration to the terminal, the sending module 1701 is configured to:
in response to CFRA triggered by switching, send a RACH-ConfigDedicated to the terminal, in which a CFRA configuration of the RACH-ConfigDedicated carries the first multi-PRACH transmission configuration.

In an embodiment of the disclosure, when sending the multi-PRACH transmission configuration to the terminal, the sending module 1701 is configured to:
in response to CFRA triggered by beam failure recovery, send a beam failure recovery configuration to the terminal, in which the beam failure recovery configuration carries the first multi-PRACH transmission configuration.

In an embodiment of the disclosure, the beam failure recovery configuration includes at least one of:
a BeamFailureRecoveryConfig;
a BeamFailureRecoverySCellConfig; or
a BeamFailureRecoveryServingCellConfig.

In an embodiment of the disclosure, when sending the multi-PRACH transmission configuration to the terminal, the sending module 1701 is configured to:
send the second multi-PRACH transmission configuration to the terminal via a broadcast signaling or a dedicated signaling.

In an embodiment of the disclosure, the broadcast signaling includes a SIB1.

In an embodiment of the disclosure, the dedicated signaling includes at least one of:
an RRCReconfiguration message;
an RRCResume message;
an RRCRelease message; or
an RRCSetup message.

In an embodiment of the disclosure, when sending the second multi-PRACH transmission configuration to the terminal, the sending module 1701 is configured to:
send a common RACH configuration to the terminal, in which the RACH configuration carries the second multi-PRACH transmission configuration.

In an embodiment of the disclosure, the RACH configuration includes common RACH resources configured separately on each BWP.

In an embodiment of the disclosure, when sending the RACH configuration to the terminal, the sending module 1701 is configured to:
send a first RACH-ConfigCommon in an initial BWP configuration of a SIB1 to the terminal, in which the first RACH-ConfigCommon carries the RACH configuration.

In an embodiment of the disclosure, when sending the RACH configuration to the terminal, the sending module 1701 is configured to:
send a second RACH-ConfigCommon in a BWP configuration of an RRCReconfiguration message to the terminal, in which the second RACH-ConfigCommon carries the RACH configuration.

In an embodiment of the disclosure, when sending the second multi-PRACH transmission configuration to the terminal, the sending module 1701 is configured to:
send a dedicated RACH configuration to the terminal, in which the dedicated RACH configuration carries the second multi-PRACH transmission configuration.

In an embodiment of the disclosure, when sending the dedicated RACH configuration to the terminal, the sending module 1701 is configured to:
in response to CBRA triggered by beam failure recovery, send a BeamFailureRecoveryConfig to the terminal, in which the BeamFailureRecoveryConfig carries the second multi-PRACH transmission configuration configured in the dedicated RACH configuration.

In an embodiment of the disclosure, when sending the second multi-PRACH transmission configuration to the terminal, the sending module 1701 is configured to:
in response to CBRA triggered by PScell addition or change, send a RACH-ConfigDedicated to the terminal, in which the RACH-ConfigDedicated carries the second multi-PRACH transmission configuration configured in the dedicated RACH configuration.

In an embodiment of the disclosure, when sending the second multi-PRACH transmission configuration to the terminal, the sending module 1701 is configured to:
in response to CBRA triggered by switching, send a RACH-ConfigDedicated to the terminal, in which a CBRA configuration of the RACH-ConfigDedicated carries the second multi-PRACH transmission configuration.

In an embodiment of the disclosure, when sending the second multi-PRACH transmission configuration to the terminal, the sending module 1701 is configured to:
send a RACH configuration of a feature combination to the terminal, in which the RACH configuration of the feature combination carries the second multi-PRACH transmission configuration.

In an embodiment of the disclosure, the feature combination includes a Coverage Enhancement feature, in which the Coverage Enhancement feature is used to indicate a Coverage Enhancement feature that supports the CBRA multi-PRACH transmission.

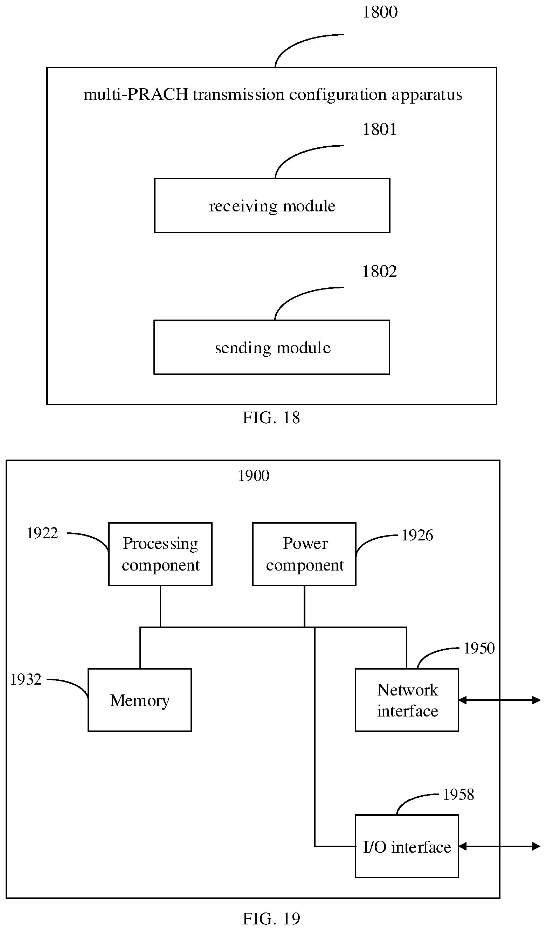

FIG. 18 is a structural diagram of a multi-PRACH transmission configuration apparatus provided by an embodiment of the disclosure. As illustrated in FIG. 18, the apparatus 1800 includes:
a receiving module 1801, configured to receive a multi-PRACH transmission configuration sent by a network device, in which the multi-PRACH transmission configuration includes a first multi-PRACH transmission configuration and/or a second multi-PRACH transmission configuration, the first multi-PRACH transmission configuration is used for CFRA multi-PRACH transmission configuration, and the second multi-PRACH transmission configuration is used for CBRA multi-PRACH transmission configuration; and
a sending module 1802, configured to send CFRA multi-PRACH transmission initiated according to the first multi-PRACH transmission configuration and/or CBRA multi-PRACH transmission initiated according to the second multi-PRACH transmission configuration to the network device.

In conclusion, with multi-PRACH transmission configuration apparatus provided in embodiments of the disclosure, the receiving module receives a multi-PRACH transmission configuration sent by the network device, in which the multi-PRACH transmission configuration includes a first multi-PRACH transmission configuration and/or a second multi-PRACH transmission configuration, the first multi-PRACH transmission configuration is used for CFRA multi-PRACH transmission configuration, and the second multi-PRACH transmission configuration is used for CBRA multi-PRACH transmission configuration. The sending module sends CFRA multi-PRACH transmission initiated according to the first multi-PRACH transmission configuration and/or CBRA multi-PRACH transmission initiated according to the second multi-PRACH transmission configuration to the network device. In embodiments of the disclosure, the terminal may initiate CFRA multi-PRACH transmission and/or CBRA multi-PRACH transmission according to the received multi-PRACH transmission configuration, thereby reducing the probability of random access failure. The disclosure provides a method for processing a "multi-PRACH transmission configuration" to enable the network device to receive the CFRA multi-PRACH transmission and/or CBRA multi-PRACH transmission initiated by the terminal according to the multi-PRACH transmission configuration, thereby improving the coverage of PRACH.

Optionally, in an embodiment of the disclosure, a trigger mode of CFRA includes at least one of:
a PDCCH trigger;
a switching trigger;
a beam failure recovery trigger; or
a PScell addition or change trigger.

Optionally, in an embodiment of the disclosure, when receiving the multi-PRACH transmission configuration sent by the network device, the receiving module 1801 is configured to:
in response to CFRA triggered by PDCCH, receive a PDCCH order sent by the network device, in which the PDCCH order carries the first multi-PRACH transmission configuration.

Optionally, in an embodiment of the disclosure, when receiving the multi-PRACH transmission configuration sent by the network device, the receiving module 1801 is configured to:
in response to CFRA triggered by PScell addition or change, receive a RACH-ConfigDedicated sent by the network device, in which a CFRA configuration of the RACH-ConfigDedicated carries the first multi-PRACH transmission configuration.

Optionally, in an embodiment of the disclosure, when receiving the multi-PRACH transmission configuration sent by the network device, the receiving module 1801 is configured to:
in response to CFRA triggered by switching, receive a RACH-ConfigDedicated sent by the network device, in which a CFRA configuration of the RACH-ConfigDedicated carries the first multi-PRACH transmission configuration.

Optionally, in an embodiment of the disclosure, when receiving the multi-PRACH transmission configuration sent by the network device, the receiving module 1801 is configured to:
in response to CFRA triggered by beam failure recovery, receive a beam failure recovery configuration sent by the network device, in which the beam failure recovery configuration carries the first multi-PRACH transmission configuration.

Optionally, in an embodiment of the disclosure, the beam failure recovery configuration includes at least one of:
a BeamFailureRecoveryConfig;
a BeamFailureRecoverySCellConfig; or
a BeamFailureRecoveryServingCellConfig.

Optionally, in an embodiment of the disclosure, when receiving the multi-PRACH transmission configuration sent by the network device, the receiving module 1801 is configured to:
receive the second multi-PRACH transmission configuration sent by the network device via a broadcast signaling or a dedicated signaling.

Optionally, in an embodiment of the disclosure, the broadcast signaling includes a SIB 1.

Optionally, in an embodiment of the disclosure, the dedicated signaling includes at least one of:
an RRCReconfiguration message;
an RRCResume message;
an RRCRelease message; or
an RRCSetup message.

Optionally, in an embodiment of the disclosure, when receiving the second multi-PRACH transmission configuration sent by the network device, the receiving module 1801 is configured to:
receive a RACH configuration sent by the network device, in which the RACH configuration carries the second multi-PRACH transmission configuration.

Optionally, in an embodiment of the disclosure, the RACH configuration includes common RACH resources configured separately on each BWP.

Optionally, in an embodiment of the disclosure, when receiving the second multi-PRACH transmission configuration sent by the network device, the receiving module 1801 is configured to:
receiving a first RACH-ConfigCommon in an initial BWP configuration of a SIB1 sent by the network device, in which the first RACH-ConfigCommon carries the RACH configuration.

Optionally, in an embodiment of the disclosure, when receiving the second multi-PRACH transmission configuration sent by the network device, the receiving module 1801 is configured to:
receive a second RACH-ConfigCommon in a BWP configuration of an RRCReconfiguration message sent by the network device, in which the second RACH-ConfigCommon carries the RACH configuration.

Optionally, in an embodiment of the disclosure, when receiving the second multi-PRACH transmission configuration sent by the network device, the receiving module 1801 is configured to:
receive a dedicated RACH configuration sent by the network device, in which the dedicated RACH configuration carries the second multi-PRACH transmission configuration.

Optionally, in an embodiment of the disclosure, when receiving the second multi-PRACH transmission configuration sent by the network device, the receiving module 1801 is configured to:
in response to CBRA triggered by beam failure recovery, receive a BeamFailureRecoveryConfig sent by the network device, in which the BeamFailureRecoveryConfig carries the second multi-PRACH transmission configuration configured in the dedicated RACH configuration.

Optionally, in an embodiment of the disclosure, when receiving the second multi-PRACH transmission configuration sent by the network device, the receiving module 1801 is configured to:
in response to CBRA triggered by PScell addition or change, receive a RACH-ConfigDedicated sent by the network device, in which the RACH-ConfigDedicated carries the second multi-PRACH transmission configuration configured in the dedicated RACH configuration.

Optionally, in an embodiment of the disclosure, when receiving the second multi-PRACH transmission configuration sent by the network device, the receiving module 1801 is configured to:
in response to CBRA triggered by switching, receive a RACH-ConfigDedicated sent by the network device, in which a CBRA configuration of the RACH-ConfigDedicated carries the second multi-PRACH transmission configuration.

Optionally, in an embodiment of the disclosure, when receiving the second multi-PRACH transmission configuration sent by the network device, the receiving module 1801 is configured to:
receive a RACH configuration of a feature combination sent by the network device, in which the RACH configuration of the feature combination carries the second multi-PRACH transmission configuration.

Optionally, in an embodiment of the disclosure, the feature combination includes a Coverage Enhancement feature, in which the Coverage Enhancement feature is used to indicate a Coverage Enhancement feature that supports the CBRA multi-PRACH transmission.

FIG. 19 is a block diagram of a network device 1900 provided by an embodiment of the disclosure. For example, the network device 1900 may be provided as a network device. As illustrated in FIG. 19, the network device 1900 includes a processing component 1922, which further includes at least one processor, and memory resources represented by a memory 1932 for storing instructions that may be executed by the processing component 1922, such as application programs. The application programs stored in the memory 1932 may include one or more modules each corresponding to a set of instructions. In addition, the processing component 1922 is configured to execute instructions to perform any method applied to the network device as described in the foregoing method embodiments, e.g., the method shown in FIG. 1.

The network device 1900 may also include a power component 1926 configured to perform power management of the network device 1900, a wired or wireless network interface 1950 configured to connect the network device 1900 to a network, and an input/output (I/O) interface 1958. The network device 1900 may operate based on an operating system stored in the memory 1932, such as Windows Server TM, Mac OS XTM, Unix TM, Linux TM, Free BSDTM or the like.

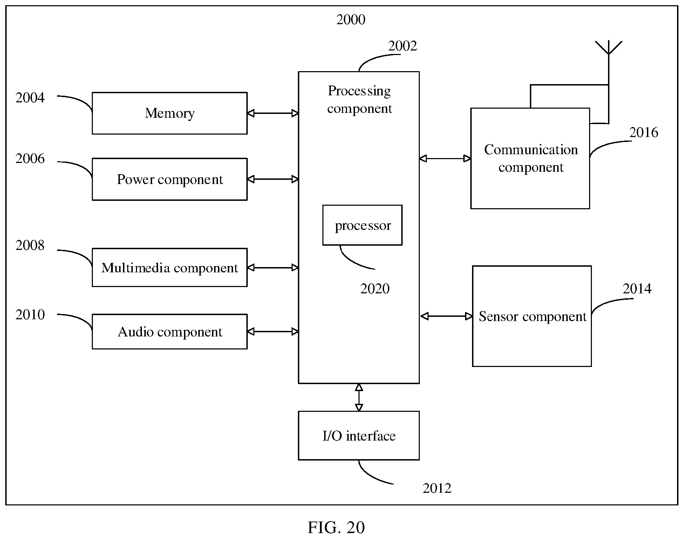

FIG. 20 is a schematic diagram of a user equipment (UE) 2000 illustrated according to an embodiment. For example, the UE 2000 may be a mobile phone, a computer, a digital broadcasting UE, a message transceiver device, a game console, a tablet device, a medical device, a fitness device or a personal digital assistant.

As illustrated in FIG. 20, the UE 2000 may include one or more of the following components: a processing component 2002, a memory 2004, a power component 2006, a multimedia component 2008, an audio component 2010, an input/output (I/O) interface 2012, a sensor component 2014, and a communication component 2016.

The processing component 2002 typically controls overall operations of the UE 2000, such as the operations associated with display, telephone calls, data communications, camera operations, and recording operations. The processing component 2002 may include at least one processor 2020 to perform all or part of the steps in the above described methods. Moreover, the processing component 2002 may include at least one module which facilitates the interaction between the processing component 2002 and other components. For example, the processing component 2002 may include a multimedia module to facilitate the interaction between the multimedia component 2008 and the processing component 2002.

The memory 2004 is configured to store various types of data to support the operation of the UE 2000. Examples of such data include instructions for any applications or methods operated on the UE 2000, contact data, phonebook data, messages, pictures, video, etc. The memory 2004 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 2006 provides power to various components of the UE 2000. The power component 2006 may include a power management system, at least one power source, and any other components associated with the generation, management, and distribution of power in the UE 2000.

The multimedia component 2008 includes a screen providing an output interface between the UE 2000 and the user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of wakeup time and a pressure associated with the touch or swipe action. In some embodiments, the multimedia component 2008 includes a front-facing camera and/or a rear-facing camera. When the UE 2000 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 2010 is configured to output and/or input audio signals. For example, the audio component 2010 includes a microphone (MIC) configured to receive an external audio signal when the UE 2000 is in an operation mode, such as a call mode, a recording mode, and a voice recognition mode. The received audio signal may be further stored in the memory 2004 or transmitted via the communication component 2016. In some embodiments, the audio component 2010 further includes a speaker to output audio signals.

The I/O interface 2012 provides an interface between the processing component 2002 and peripheral interface modules, such as a keyboard, a click wheel, buttons, and the like. The buttons may include, but are not limited to, a home button, a volume button, a starting button, and a locking button.

The sensor component 2014 includes at least one sensor to provide status assessments of various aspects of the UE 2000. For instance, the sensor component 2014 may detect an open/closed status of the UE 2000, relative positioning of components, e.g., the display and the keypad, of the UE 2000, a change in position of the UE 2000 or a component of the UE 2000, a presence or absence of user contact with the UE 2000, an orientation or an acceleration/deceleration of the UE 2000, and a change in temperature of the UE 2000. The sensor component 2014 may include a proximity sensor configured to detect the presence of nearby objects without any physical contact. The sensor component 2014 may also include a light sensor, such as a Complementary Metal Oxide Semiconductor (CMOS) or Charge-Coupled Device (CCD) image sensor, for use in imaging applications. In some embodiments, the sensor component 2014 may also include an accelerometer sensor, a gyroscope sensor, a magnetic sensor, a pressure sensor, or a temperature sensor.

The communication component 2016 is configured to facilitate communication, wired or wirelessly, between the UE 2000 and other devices. The UE 2000 can access a wireless network based on a communication standard, such as Wi-Fi, 2G or 3G, or a combination thereof. In an exemplary embodiment, the communication component 2016 receives a broadcast signal or broadcast associated information from an external broadcast management system via a broadcast channel. In an exemplary embodiment, the communication component 2016 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some exemplary embodiments, the UE 2000 may be implemented with at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described methods.

In the above embodiments of the disclosure, the methods provided in the embodiments of the disclosure are described from the perspectives of the network device and the UE, respectively. In order to realize each of the functions in the methods provided by the above embodiments of the disclosure, the network device and the UE may include a hardware structure, a software module, and realize each of the above functions in the form of the hardware structure, the software module, or a combination of the hardware structure and the software module. A certain function of the above functions may be performed in the form of a hardware structure, a software module, or a combination of the hardware structure and the software module.

In the above embodiments of the disclosure, the methods provided in the embodiments of the disclosure are described from the perspectives of the network device and the UE, respectively. In order to realize each of the functions in the methods provided by the above embodiments of the disclosure, the network device and the UE may include a hardware structure, a software module, and realize each of the above functions in the form of the hardware structure, the software module, or a combination of the hardware structure and the software module. A certain function of the above functions may be performed in the form of a hardware structure, a software module, or a combination of the hardware structure and the software module.

An embodiment of the disclosure provides a communication device. The communication device may include a transceiver module and a processing module. The transceiver module may include a sending module and/or a receiving module. The sending module is used for realizing a sending function, and the receiving module is used for realizing a receiving function. The transceiver module may realize the sending function and/or the receiving function.

The communication device may be a terminal (e.g., the terminal in the preceding method embodiments), a device in the terminal, or a device capable of being used together with the terminal. Alternatively, the communication device may be a network device, or a device in the network device, or a device capable of being used together with the network device.

An embodiment of the disclosure provides another communication device. The communication device may be a network device, a terminal (e.g., the terminal in the preceding method embodiments), or a chip, a chip system or a processor that supports the network device to realize the above-described methods, or a chip, a chip system or a processor that supports the terminal to realize the above-described methods. The device may be used to realize the methods described in the above method embodiments with reference to the description of the above-described method embodiments.

The communication device may include one or more processors. The processor may be a general purpose processor or a dedicated processor, such as, a baseband processor or a central processor. The baseband processor is used for processing communication protocols and communication data. The central processor is used for controlling the communication device (e.g., network device, baseband chip, terminal, terminal chip, DU, or CU), executing computer programs, and processing data of the computer programs.

Optionally, the communication device may include one or more memories on which computer programs may be stored. The processor executes the computer programs to cause the communication device to perform the methods described in the above method embodiments. Optionally, data may also be stored in the memory. The communication device and the memory may be provided separately or may be integrated together.

Optionally, the communication device may also include a transceiver and an antenna. The transceiver may be referred to as transceiver unit, transceiver machine, or transceiver circuit, for realizing the transceiver function. The transceiver may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication device may also include one or more interface circuits. The interface circuits are used to receive code instructions and transmit them to the processor. The processor runs the code instructions to cause the communication device to perform the method described in the method embodiments.

In a case where the communication device is a network device, the processor is used to perform the method shown in any of FIGS. 1-8

The communication device is a terminal (e.g., the terminal in the preceding method embodiments), the processor is used to perform the method shown in any of FIGS. 9-16.

In an implementation, the processor may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor may store computer programs. The processor runs the computer programs to cause the communication device to perform the methods described in the method embodiments above. The computer programs may be solidified in the processor, in which case the processor may be implemented by hardware.

In an implementation, the communication device may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal (e.g., the terminal in the above method embodiments), but the scope of the communication device described in the disclosure is not limited thereto, and the structure of the communication device may not be limited by FIGS. 19 and 20. The communication device may be a stand-alone device or may be part of a larger device. For example, the described communication device may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

If the communication device is a chip or a chip system, the chip includes a processor and an interface. There may be one or more processors, and there may be multiple interfaces.

Optionally, the chip further includes a memory used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. A multi-physical random access channel (PRACH) transmission configuration method, performed by a network device, comprising:
sending a multi-PRACH transmission configuration to a terminal, wherein the multi-PRACH transmission configuration comprises a first multi-PRACH transmission configuration and/or a second multi-PRACH transmission configuration, the first multi-PRACH transmission configuration is used for contention-free random access (CFRA) multi-PRACH transmission configuration, and the second multi-PRACH transmission configuration is used for contention-based random access (CBRA) multi-PRACH transmission configuration; and
receiving CFRA multi-PRACH transmission initiated by the terminal according to the first multi-PRACH transmission configuration and/or CBRA multi-PRACH transmission initiated by the terminal according to the second multi-PRACH transmission configuration.

2. The method of claim 1, wherein a trigger mode of CFRA comprises at least one of:
a physical downlink control channel (PDCCH) trigger;
a switching trigger;
a beam failure recovery trigger; or
a primary secondary cell (PScell) addition or change trigger.

3. The method of claim 2, wherein sending the multi-PRACH transmission configuration to the terminal comprises:
in response to CFRA triggered by PDCCH, sending a PDCCH order to the terminal, wherein the PDCCH order carries the first multi-PRACH transmission configuration.

4. The method of claim 2, wherein sending the multi-PRACH transmission configuration to the terminal comprises:
in response to CFRA triggered by PScell addition or change, sending a dedicated random access channel (RACH) configuration (RACH-ConfigDedicated) to the terminal, wherein a CFRA configuration of the RACH-ConfigDedicated carries the first multi-PRACH transmission configuration.

5. The method of claim 2, wherein sending the multi-PRACH transmission configuration to the terminal comprises:
in response to CFRA triggered by switching, sending a RACH-ConfigDedicated to the terminal, wherein a CFRA configuration of the RACH-ConfigDedicated carries the first multi-PRACH transmission configuration.

6. The method of claim 2, wherein sending the multi-PRACH transmission configuration to the terminal comprises:
in response to CFRA triggered by beam failure recovery, sending a beam failure recovery configuration to the terminal, wherein the beam failure recovery configuration carries the first multi-PRACH transmission configuration.

7. The method of claim 6, wherein the beam failure recovery configuration comprises at least one of:
a beam failure recovery configuration (BeamFailureRecoveryConfig);
a beam failure recovery secondary cell (SCell) configuration (BeamFailureRecoverySCellConfig); or
a beam failure recovery serving cell configuration (BeamFailureRecoveryServingCellConfig).

8. The method of claim 1, wherein sending the multi-PRACH transmission configuration to the terminal comprises:
sending the second multi-PRACH transmission configuration to the terminal via a broadcast signaling or a dedicated signaling.

9. The method of claim 8, wherein the broadcast signaling comprises a system information block 1 (SIB1).

10. The method of claim 8, wherein the dedicated signaling comprises at least one of:
a radio resource control (RRC) reconfiguration (RRCReconfiguration) message;
an RRC resume (RRCResume) message;
an RRC release (RRCRelease) message; or
an RRC setup (RRCSetup) message.

11. The method of claim 8, wherein sending the second multi-PRACH transmission configuration to the terminal comprises:
sending a common RACH configuration to the terminal, wherein the RACH configuration carries the second multi-PRACH transmission configuration.

12. The method of claim 11, wherein the RACH configuration comprises common RACH resources configured separately on each bandwidth part (BWP).

13. The method of claim 11, wherein sending the RACH configuration to the terminal comprises:
sending a first RACH common configuration (RACH-ConfigCommon) in an initial BWP configuration of a SIB1 to the terminal, wherein the first RACH-ConfigCommon carries the RACH configuration.

14. The method of claim 11, wherein sending the RACH configuration to the terminal comprises:
sending a second RACH-ConfigCommon in a BWP configuration of an RRCReconfiguration message to the terminal, wherein the second RACH-ConfigCommon carries the RACH configuration.

15. The method of claim 8, wherein sending the second multi-PRACH transmission configuration to the terminal comprises:
sending a dedicated RACH configuration to the terminal, wherein the dedicated RACH configuration carries the second multi-PRACH transmission configuration.

16. The method of claim 15, wherein sending the dedicated RACH configuration to the terminal comprises:
in response to CBRA triggered by beam failure recovery, sending a BeamFailureRecoveryConfig to the terminal, wherein the BeamFailureRecoveryConfig carries the second multi-PRACH transmission configuration configured in the dedicated RACH configuration.

17. The method of claim 15, wherein sending the second multi-PRACH transmission configuration to the terminal comprises:
in response to CBRA triggered by PScell addition or change, sending a RACH-ConfigDedicated to the terminal, wherein the RACH-ConfigDedicated carries the second multi-PRACH transmission configuration configured in the dedicated RACH configuration.

18. The method of claim 15, wherein sending the second multi-PRACH transmission configuration to the terminal comprises:
in response to CBRA triggered by switching, sending a RACH-ConfigDedicated to the terminal, wherein a CBRA configuration of the RACH-ConfigDedicated carries the second multi-PRACH transmission configuration.

19. The method of claim 17, wherein sending the second multi-PRACH transmission configuration to the terminal comprises:
sending a RACH configuration of a feature combination to the terminal, wherein the RACH configuration of the feature combination carries the second multi-PRACH transmission configuration.

20. The method of claim 19, wherein the feature combination comprises a Coverage Enhancement feature, wherein the Coverage Enhancement feature is used to indicate a Coverage Enhancement feature that supports the CBRA multi-PRACH transmission.

21. A multi-physical random access channel (PRACH) transmission configuration method, performed by a terminal, comprising:
receiving a multi-PRACH transmission configuration sent by a network device, wherein the multi-PRACH transmission configuration comprises a first multi-PRACH transmission configuration and/or a second multi-PRACH transmission configuration, the first multi-PRACH transmission configuration is used for contention-free random access (CFRA) multi-PRACH transmission configuration, and the second multi-PRACH transmission configuration is used for contention-based random access (CBRA) multi-PRACH transmission configuration; and
sending CFRA multi-PRACH transmission initiated according to the first multi-PRACH transmission configuration and/or CBRA multi-PRACH transmission initiated according to the second multi-PRACH transmission configuration to the network device.

22. The method of claim 21, wherein a trigger mode of CFRA comprises at least one of:
a physical downlink control channel (PDCCH) trigger;
a switching trigger;
a beam failure recovery trigger; or
a primary secondary cell (PScell) addition or change trigger.

23. The method of claim 22, wherein receiving the multi-PRACH transmission configuration sent by the network device comprises:
in response to CFRA triggered by PDCCH, receiving a PDCCH order sent by the network device, wherein the PDCCH order carries the first multi-PRACH transmission configuration.

24. The method of claim 22, wherein receiving the multi-PRACH transmission configuration sent by the network device comprises:
in response to CFRA triggered by PScell addition or change, receiving a dedicated random access channel (RACH) configuration (RACH-ConfigDedicated) sent by the network device, wherein a CFRA configuration of the RACH-ConfigDedicated carries the first multi-PRACH transmission configuration.

25. The method of claim 22, wherein receiving the multi-PRACH transmission configuration sent by the network device comprises:
in response to CFRA triggered by switching, receiving a RACH-ConfigDedicated sent by the network device, wherein a CFRA configuration of the RACH-ConfigDedicated carries the first multi-PRACH transmission configuration.

26. The method of claim 22, wherein receiving the multi-PRACH transmission configuration sent by the network device comprises:
in response to CFRA triggered by beam failure recovery, receiving a beam failure recovery configuration sent by the network device, wherein the beam failure recovery configuration carries the first multi-PRACH transmission configuration.

27. The method of claim 26, wherein the beam failure recovery configuration comprises at least one of:
a beam failure recovery configuration (BeamFailureRecoveryConfig);
a beam failure recovery secondary cell (SCell) configuration (BeamFailureRecoverySCellConfig); or
a beam failure recovery serving cell configuration (BeamFailureRecoveryServingCellConfig).

28. The method of claim 21, wherein receiving the multi-PRACH transmission configuration sent by the network device comprises:
receiving the second multi-PRACH transmission configuration sent by the network device via a broadcast signaling or a dedicated signaling.

29. The method of claim 28, wherein the broadcast signaling comprises a system information block 1 (SIB1).

30. The method of claim 28, wherein the dedicated signaling comprises at least one of:
a radio resource control (RRC) reconfiguration (RRCReconfiguration) message;
an RRC resume (RRCResume) message;
an RRC release (RRCRelease) message; or
an RRC setup (RRCSetup) message.

31. The method of claim 28, wherein receiving the second multi-PRACH transmission configuration sent by the network device comprises:
receiving a RACH configuration sent by the network device, wherein the RACH configuration carries the second multi-PRACH transmission configuration.

32. The method of claim 31, wherein the RACH configuration comprises common RACH resources configured separately on each bandwidth part (BWP).

33. The method of claim 31, wherein receiving the second multi-PRACH transmission configuration sent by the network device comprises:
receiving a first RACH common configuration (RACH-ConfigCommon) in an initial BWP configuration of a SIB1 sent by the network device, wherein the first RACH-ConfigCommon carries the RACH configuration.

34. The method of claim 31, wherein receiving the second multi-PRACH transmission configuration sent by the network device comprises:
receiving a second RACH-ConfigCommon in a BWP configuration of an RRCReconfiguration message sent by the network device, wherein the second RACH-ConfigCommon carries the RACH configuration.

35. The method of claim 28, wherein receiving the second multi-PRACH transmission configuration sent by the network device comprises:
receiving a dedicated RACH configuration sent by the network device, wherein the dedicated RACH configuration carries the second multi-PRACH transmission configuration.

36. The method of claim 35, wherein receiving the second multi-PRACH transmission configuration sent by the network device comprises:
in response to CBRA triggered by beam failure recovery, receiving a BeamFailureRecoveryConfig sent by the network device, wherein the BeamFailureRecoveryConfig carries the second multi-PRACH transmission configuration configured in the dedicated RACH configuration.

37. The method of claim 35, wherein receiving the second multi-PRACH transmission configuration sent by the network device comprises:
in response to CBRA triggered by PScell addition or change, receiving a RACH-ConfigDedicated sent by the network device, wherein the RACH-ConfigDedicated carries the second multi-PRACH transmission configuration configured in the dedicated RACH configuration.

38. The method of claim 35, wherein receiving the second multi-PRACH transmission configuration sent by the network device comprises:
in response to CBRA triggered by switching, receiving a RACH-ConfigDedicated sent by the network device, wherein a CBRA configuration of the RACH-ConfigDedicated carries the second multi-PRACH transmission configuration.

39. The method of claim 37, wherein receiving the second multi-PRACH transmission configuration sent by the network device comprises:
receiving a RACH configuration of a feature combination sent by the network device, wherein the RACH configuration of the feature combination carries the second multi-PRACH transmission configuration.

40. The method of claim 39, wherein the feature combination comprises a Coverage Enhancement feature, wherein the Coverage Enhancement feature is used to indicate a Coverage Enhancement feature that supports the CBRA multi-PRACH transmission.

41. A multi-physical random access channel (PRACH) transmission configuration apparatus, comprising:
a sending module, configured to send a multi-PRACH transmission configuration to a terminal, wherein the multi-PRACH transmission configuration comprises a first multi-PRACH transmission configuration and/or a second multi-PRACH transmission configuration, the first multi-PRACH transmission configuration is used for contention-free random access (CFRA) multi-PRACH transmission configuration, and the second multi-PRACH transmission configuration is used for contention-based random access (CBRA) multi-PRACH transmission configuration, and the first multi-PRACH transmission configuration is used for CFRA multi-PRACH transmission configuration and the second multi-PRACH transmission configuration is used for CBRA multi-PRACH transmission configuration; and
a receiving module, configured to receive CFRA multi-PRACH transmission initiated by the terminal according to the first multi-PRACH transmission configuration and/or CBRA multi-PRACH transmission initiated by the terminal according to the second multi-PRACH transmission configuration.

42. A multi-physical random access channel (PRACH) transmission configuration apparatus, comprising:
a receiving module, configured to receive a multi-PRACH transmission configuration sent by a network device, wherein the multi-PRACH transmission configuration comprises a first multi-PRACH transmission configuration and/or a second multi-PRACH transmission configuration, the first multi-PRACH transmission configuration is used for contention-free random access (CFRA) multi-PRACH transmission configuration, and the second multi-PRACH transmission configuration is used for contention-based random access (CBRA) multi-PRACH transmission configuration; and
a sending module, configured to send CFRA multi-PRACH transmission initiated according to the first multi-PRACH transmission configuration and/or CBRA multi-PRACH transmission initiated according to the second multi-PRACH transmission configuration to the network device.

43. A network device, comprising a processor and a memory having a computer program stored thereon, wherein when the computer program is executed by the processor, the device is caused to implement the method of any one of claims 1-20.

44. A terminal, comprising a processor and a memory having a computer program stored thereon, wherein when the computer program is executed by the processor, the device is caused to implement the method of any one of claims 21-40.

45. A communication device, comprising: a processor and an interface circuit,
wherein the interface circuit is configured to receive code instructions and send the code instructions to the processor; and
the processor is configured to run the code instructions to perform the method of any one of claims 1-20.

46. A communication device, comprising: a processor and an interface circuit,
wherein the interface circuit is configured to receive code instructions and send the code instructions to the processor; and
the processor is configured to run the code instructions to perform the method of any one of claims 21-40.

47. A computer-readable storage medium for storing instructions, wherein when the instructions are executed, the method of any one of claims 1-20 is implemented.

48. A computer-readable storage medium for storing instructions, wherein when the instructions are executed, the method of any one of claims 21-40 is implemented.
